# FASCICULE DE BREVET EUROPEEN

(11) **EP 3 612 616 B1**
(45) Date de publication et mention de la délivrance du brevet: **01.06.2022**
(21) Numéro de dépôt: 18722687.3
(22) Date de dépôt: 18.04.2018
(51) Int. Cl.: C10C 3/14, E01C 7/18, E01C 7/22, C08L 95/00, C09D 101/00, B29B 9/16

(54) **BITUME SOLIDE A TEMPERATURE AMBIANTE**
FESTE BITUMEN BEI UMGEBUNGSTEMPERATUR
SOLID BITUMEN AT AMBIENT TEMPERATURE

(30) Priorité: 21.04.2017 FR 1753473
(43) Date de publication de la demande: 26.02.2020
(73) Titulaire: Total Marketing Services, 92800 Puteaux (FR)
(72) Inventeur: COLLIAT, Romain, 38300 Ruy Montceau (FR); HUNG, Yvong, 69003 Lyon (FR)
(74) Mandataire: Corizzi, Valérie
(86) Numéro de dépôt international: PCT/FR2018/050973
(87) Numéro de publication internationale: WO 2018/193210

(56) Documents cités:
- WO-A1-2016/198782
- US-A- 4 585 816
- US-A1- 2006 260 508
- US-A1- 2011 233 105
- US-A1- 2016 222 542

## Description

### Domaine technique

La présente invention a pour objet des granules d'un matériau solide à température ambiante, utilisable comme liant routier ou comme liant d'étanchéité, tel qu'un bitume routier, un brai, un liant clair, une composition bitume/polymère. La présente invention concerne également un procédé de préparation de ces granules ainsi que leur utilisation comme liant routier, notamment pour la fabrication d'enrobés.

La présente invention concerne également un procédé de fabrication d'enrobés à partir des granules selon l'invention ainsi qu'un procédé de transport et/ou de stockage et/ou de manipulation de matériau utilisable comme liant routier ou comme liant d'étanchéité à température ambiante, notamment à température ambiante élevée.

### Etat de l'art

La grande majorité du bitume est utilisée en construction, principalement pour la fabrication de chaussées routières ou dans l'industrie, par exemple pour des applications de toiture. Il se présente généralement sous la forme d'un matériau noir fortement visqueux, voire solide à température ambiante, qui se fluidifie en chauffant.

De manière générale, le bitume est stocké et transporté à chaud, en vrac, dans des camions-citernes ou par bateaux à des températures élevées de l'ordre de 120°C à 160°C. Or, le stockage et le transport du bitume à chaud présente certains inconvénients. D'une part, le transport du bitume à chaud sous forme liquide est considéré comme dangereux et il est très encadré d'un point de vue réglementaire. Ce mode de transport ne présente pas de difficultés particulières lorsque les équipements et les infrastructures de transport sont en bon état. Dans le cas contraire, il peut devenir problématique : si le camion-citerne n'est pas suffisamment calorifugé, la viscosité du bitume pourra augmenter durant un trajet trop long. Les distances de livraison du bitume sont donc limitées. D'autre part, le maintien du bitume à des températures élevées dans les cuves ou dans les camions-citernes consomme de l'énergie. En outre, le maintien du bitume à des températures élevées pendant une longue période peut affecter les propriétés du bitume et ainsi changer les performances finales de l'enrobé.

Pour pallier les problèmes du transport et du stockage du bitume à chaud, des conditionnements permettant le transport et le stockage des bitumes à température ambiante ont été développés. Ce mode de transport du bitume en conditionnement à température ambiante ne représente qu'une fraction minime des quantités transportées dans le monde, mais il correspond à des besoins bien réels pour les régions géographiques d'accès difficile et coûteux par les moyens de transport traditionnels.

A titre d'exemple de conditionnement permettant le transport à froid utilisé actuellement, on peut citer le conditionnement du bitume à température ambiante dans des fûts métalliques. Ce moyen est de plus en plus contestable d'un point de vue environnemental car le bitume stocké dans les fûts doit être réchauffé avant son utilisation comme liant routier. Or, cette opération est difficile à mettre en oeuvre pour ce type de conditionnement et les fûts constituent un déchet après utilisation. D'autre part, le stockage du bitume à température ambiante dans des fûts conduit à des pertes car le bitume est très visqueux et une partie du produit reste sur les parois du fût lors du transvasement dans les cuves des unités de production des enrobés. Quant à la manipulation et au transport de produits bitumineux dans ces fûts, ils peuvent s'avérer difficiles et dangereux si l'équipement spécialisé de manutention des fûts n'est pas disponible chez les transporteurs ou sur le lieu d'utilisation du bitume.

A titre d'autres exemples de conditionnement, on peut citer les bitumes sous forme de granules transportés et/ou stockés dans des sacs, souvent utilisés dans des endroits où la température ambiante est élevée. Ces granules présentent l'avantage d'être facilement manipulables.

La même difficulté est rencontrée dans la manipulation, le conditionnement et le stockage des brais et des compositions bitumineuses comprenant, des liants clairs, des compositions bitume/polymère, notamment les solutions-mères de compositions bitume/polymère.

US 3 026 568 décrit des granules de bitume recouverts d'un matériau poudreux, tel que de la poudre de calcaire. Néanmoins, ce type de bitume en granules n'empêche pas le fluage du bitume, notamment à température ambiante élevée.

La demande WO 2009/153324 décrit des granules de bitume enrobés par un composé anti-agglomérant polymérique, en particulier du polyéthylène. L'inconvénient de cet enrobage est qu'il modifie les propriétés du bitume lors de son application routière.

La demande WO 2016/016318 décrit des granules de bitume comprenant un additif chimique. Ces granules de bitume permettent le transport et/ou le stockage et/ou la manipulation du bitume à température ambiante sans que celui-ci ne flue, ainsi que la réduction de leur adhésion et agglomération entre eux.

La demande WO 2016/198782 décrit des bitumes solides à température ambiante sous forme de granules comprenant un coeur et une couche de revêtement dans lesquels :
- le coeur comprend au moins une base bitume et,
- la couche de revêtement comprend au moins 10% en masse d'un ou plusieurs composés viscosifiants par rapport à la masse totale de la couche de revêtement, et au moins un composé anti-agglomérant.

Les composés viscosifiants illustrés dans WO 2016/198782 sont à base de gélatine. Ces granules présentent des propriétés d'usage satisfaisantes, toutefois, ils présentent l'inconvénient de nécessiter une étape supplémentaire après l'enrobage des coeurs par la couche de revêtement, pour permettre la formation d'une coque autour des cœurs.

La demande US 2011/233105 décrit des granules d'asphalte stables au stockage et présentant une structure coeur/enveloppe. Le coeur des granules est constitué d'un mélange d'un matériau bitumineux obtenu par recyclage de bardeaux et d'un liant bitumineux. L'enveloppe, notamment à base de fines, minérales ou de plastiques broyés, ou encore d'argile permet d'éviter l'agglomération des granules au cours de leur stockage.

US 4585816 décrit des granules de bitume et qui peuvent être enrobés par une couche d'un matériau choisi parmi les matériaux anti-agglomérants.

US 2006/0260508 décrit des granules de chaux qui peuvent être liées par un liant compatible avec les bitumes.

Dans la continuité de ses travaux, la Demanderesse a découvert de manière surprenante une nouvelle composition de granules de matériau solide à température ambiante, utilisable comme liant routier ou comme liant d'étanchéité, tel qu'un bitume routier, un brai, une composition bitume/polymère, un liant clair, permettant d'éviter et de réduire l'adhésion et l'agglomération lors de leur transport et/ou stockage et/ou manipulation, à température ambiante élevée, sur des longues périodes et dont les propriétés sont conservées au cours du temps par rapport aux granules de l'art antérieur.

Plus précisément, la Demanderesse a mis en évidence que cette nouvelle composition de granules permet de résister au fluage dans des conditions extrêmes de transport et/ou de stockage et/ou de manipulation, dans des conditions de compression, notamment dues au stockage, sur des périodes très longues.

### Résumé de l'invention

L'invention a pour objet des granules de matériau utilisable comme liant routier ou comme liant d'étanchéité comprenant un coeur et une couche de revêtement dans lesquels :
- le coeur est constitué d'une première composition comprenant au moins un matériau choisi parmi : une base bitume, un brai, un liant clair,
et
- la couche de revêtement est constituée d'une seconde composition qui comprend :
   - au moins un composé viscosifiant choisi parmi les éthers de cellulose, et
   - au moins un agent anti-agglomérant.

L'invention concerne encore un procédé de fabrication de granules de matériau utilisable comme liant routier ou comme liant d'étanchéité, composés d'un coeur et d'une couche de revêtement du coeur, ce procédé comprenant :
i) la mise en forme du coeur à partir d'une première composition comprenant au moins un matériau choisi parmi : une base bitume, un brai, un liant clair,
ii) l'enrobage du cœur sur tout ou partie de sa surface par une seconde composition comprenant au moins un composé viscosifiant choisi parmi les éthers de cellulose et au moins un agent anti-agglomérant.

L'invention concerne également des granules de matériau utilisable comme liant routier ou comme liant d'étanchéité, susceptibles d'être obtenus par la mise en oeuvre de ce procédé.

Selon un mode de réalisation de l'invention, l'éther de cellulose est choisi parmi : la méthyl cellulose, l'éthylcellulose, l'hydroxyméthylcellulose l'hydroxyéthylcellulose (HEC), l'hydroxypropylcellulose (HPC), l'hydroxyéthyl méthylcellulose (HEMC), l'hydroxypropyl méthylcellulose (HPMC), l'hydroxybutyl méthylcellulose (HBMC), la carboxyméthylcellulose (CMC), la carboxyméthylcellulose de sodium (Na-CMC), la carboxyméthylsulfoéthylcellulose, l'hydroxyéthylméthylcarboxyméthylcellulose.

Selon un mode de réalisation préféré de l'invention, l'éther de cellulose est choisi parmi : l'hydroxyéthyl méthylcellulose, l'hydroxypropyl méthylcellulose, l'hydroxybutyl méthylcellulose, encore plus avantageusement l'hydroxypropyl méthylcellulose.

Selon un mode de réalisation de l'invention, la seconde composition comprend au moins 10% d'un ou plusieurs agents anti-agglomérants, les pourcentages étant exprimés en masse par rapport à la masse totale de la seconde composition.

Selon un mode de réalisation préféré de l'invention, la seconde composition comprend : au moins 20% d'un ou plusieurs agents anti-agglomérants, encore mieux au moins 30 %, avantageusement au moins 40 %, encore mieux au moins 50% d'un ou plusieurs agents anti-agglomérants, et éventuellement un ou plusieurs agents plastifiants, les pourcentages étant exprimés en masse par rapport à la masse totale de la seconde composition.

De préférence, le composé anti-agglomérant est choisi parmi : le talc ; les fines généralement de diamètre inférieur à 125 µm, telles que les fines siliceuses, à l'exception des fines calcaires ; le sable tel que le sable de fontainebleau ; le ciment ; le carbone ; les résidus de bois tels que la lignine, le lignosulfonate, les poudres d'aiguilles de conifères, les poudres de cônes de conifères, notamment de pin ; les cendres de balles de riz ; la poudre de verre ; les argiles telles que le kaolin, la bentonite, la vermiculite ; l'alumine telle que les hydrates d'alumine ; la silice ; les dérivés de silice tels que les fumées de silice, les fumées de silice fonctionnalisées, notamment les fumées de silice hydrophobe ou hydrophile, les silices pyrogénées, notamment les silices pyrogénées hydrophobes ou hydrophiles, les silicates, les hydroxydes de silicium et les oxydes de silicium ; la poudre de matière plastique; la chaux ; la chaux hydratée ; le plâtre ; la poudrette de caoutchouc ; la poudre de polymères, tels que les copolymères styrène-butadiène (SB), les copolymères styrène-butadiène-styrène (SBS) et les mélanges de ces matériaux.

Selon un mode de réalisation de l'invention, la première composition présente une pénétrabilité à l'aiguille mesurée à 25°C selon la norme EN 1426 de 5 à 330 1/10 mm, de préférence de 10 à 220 1/10 mm.

Selon un mode de réalisation de l'invention, la base bitume comprend en outre au moins un additif chimique choisi parmi : un composé organique, une paraffine, un acide polyphosphorique, un dope d'adhésivité, et leurs mélanges.

Selon un mode de réalisation de l'invention, la première composition comprenant au moins un additif chimique présente une pénétrabilité de 5 à 45 1/10mm, mesurée à 25°C selon la norme EN 1426 et/ou une température de ramollissement bille et anneau supérieure ou égale à 90°C, la température de ramollissement bille et anneau étant mesurée selon la norme EN 1427.

On a constaté, de façon avantageuse, que les granules de matériau utilisable comme liant routier ou comme liant d'étanchéité présentent une stabilité au transport et/ou au stockage et/ou à la manipulation à une température allant jusqu'à 100°C, avantageusement de 20°C à 90°C, de préférence de 20°C à 80°C, plus préférentiellement de 40°C à 80°C, encore plus préférentiellement de 40°C à 60°C, pendant une durée supérieure ou égale à 2 mois, de préférence supérieure ou égale à 3 mois.

Selon un mode de réalisation préféré, dans le procédé de l'invention, la seconde composition est appliquée sur le coeur des granules dans un dispositif à lit d'air fluidisé.

L'invention concerne également l'utilisation des granules définis ci-dessus comme liant routier.

Selon un mode de réalisation préféré, l'utilisation concerne la fabrication d'enrobés.

L'invention concerne encore un procédé de fabrication d'enrobés comprenant au moins un liant routier et des granulats, le liant routier étant choisi parmi les granules définis ci-dessus, ce procédé comprenant au moins les étapes de :
- chauffage des granulats à une température allant de 100°C à 180°C, de préférence de 120°C à 160°C,
- mélange des granulats avec le liant routier dans une cuve telle qu'un malaxeur ou un tambour malaxeur,
- obtention d'enrobés.

Selon un mode de réalisation préféré, le procédé de fabrication d'enrobés ne comporte pas d'étape de chauffage du liant routier avant son mélange avec les granulats.

L'invention concerne enfin un procédé de transport et/ou de stockage et/ou de manipulation de matériau utilisable comme liant routier ou comme liant d'étanchéité, ledit procédé comprenant la mise en forme à partir du matériau de granules de bitume tel que définis ci-dessus, puis le transport et/ou le stockage et/ou la manipulation des granules.

### Description détaillée

Les objectifs que la demanderesse s'est fixés ont été atteints grâce à la mise au point de compositions de matériau utilisable comme liant routier ou comme liant d'étanchéité, sous une forme divisée, présentant une structure coeur/enveloppe, dans laquelle le cœur est à base d'une première composition et la couche de revêtement confère à la structure globale des propriétés améliorées dans des conditions extrêmes de transport et/ou de stockage et/ou de manipulation par rapport aux granules de matériau utilisable comme liant routier ou comme liant d'étanchéité connus de l'art antérieur.

Un premier objet de l'invention concerne des granules de matériau utilisable comme liant routier ou comme liant d'étanchéité comprenant un coeur et une couche de revêtement dans lequel :
- le coeur est constitué d'une première composition qui comprend au moins un matériau choisi parmi : une base bitume, un brai, un liant clair,
et,
- la couche de revêtement est constituée d'une seconde composition qui comprend :
   - au moins un composé viscosifiant choisi parmi les éthers de cellulose, et
   - au moins un agent anti-agglomérant.

Par « température ambiante élevée », on entend la température résultante des conditions climatiques dans lesquelles est transporté et/ou stocké et/ou manipulé le matériau utilisable comme liant routier ou comme liant d'étanchéité, en particulier le bitume routier. Plus précisément, la température ambiante élevée équivaut à la température atteinte lors du transport et/ou du stockage du matériau utilisable comme liant routier ou comme liant d'étanchéité, en particulier le bitume routier, cette température étant inférieure à 100°C. Avantageusement, la température ambiante élevée est de 20°C à 90°C, de préférence de 20°C à 80°C, plus préférentiellement de 40°C à 80°C, encore plus préférentiellement de 40°C à 60°C, étant entendu que la température ambiante élevée implique qu'aucun apport de chaleur n'est apporté autre que celui résultant des conditions climatiques.

L'invention concerne des matériaux utilisables comme liant routier ou comme liant d'étanchéité, en particulier des bitumes susceptibles d'être solide lorsqu'ils sont soumis à des températures ambiantes élevées, en particulier une température allant jusqu'à 100°C, avantageusement, de 20°C à 90°C, de préférence de 20°C à 80°C, plus préférentiellement de 40°C à 80°C, encore plus préférentiellement de 40°C à 60°C.

Par « matériau utilisable comme liant routier ou comme liant d'étanchéité » on entend au sens de la présente invention tout matériau susceptible d'être mis en oeuvre pour cet usage, et notamment : les bases bitume, les compositions bitume/polymère, les compositions de bitume additivé, les brais, les solutions mères bitume-polymère, les liants clairs, les solutions mères liant clair-polymère, les mélanges de ces matériaux en toutes proportions.

Par « matériau solide à température ambiante élevée », on entend un matériau présentant un aspect solide à température ambiante élevée dans des conditions de transport et/ou de stockage et/ou de manipulation. Plus précisément, on entend par matériau solide à température ambiante élevée, un matériau qui conserve son aspect solide tout au long du transport et/ou du stockage et/ou de la manipulation à température ambiante élevée, c'est-à-dire un matériau qui ne flue pas à une température allant jusqu'à 100°C, avantageusement, de 20°C à 90°C, de préférence de 20°C à 80°C, plus préférentiellement de 40°C à 80°C, encore plus préférentiellement de 40°C à 60°C, sous son propre poids et de plus, qui ne flue pas lorsqu'il est soumis à une température allant jusqu'à 100°C, avantageusement, de 20°C à 90°C, de préférence de 20°C à 80°C, plus préférentiellement de 40°C à 80°C, encore plus préférentiellement de 40°C à 60°C, et à des forces de pressions issues des conditions de transport et/ou de stockage et/ou de manipulation.

Par « bitume solide à température ambiante », on entend un bitume présentant un aspect solide à température ambiante quelles que soient les conditions de transport et/ou de stockage. Plus précisément, on entend par bitume solide à température ambiante, un bitume qui conserve son aspect solide tout au long du transport et/ou du stockage à température ambiante, c'est-à-dire un bitume qui ne flue pas à température ambiante sous son propre poids et de plus, qui ne flue pas lorsqu'il est soumis à des forces de pressions issues des conditions de transport et/ou de stockage.

Par « couche de revêtement recouvrant tout en partie de la surface du coeur », on entend que la couche de revêtement recouvre au moins 90% de la surface du coeur, de préférence au moins 95% de la surface du coeur, plus préférentiellement au moins 99% de la surface du cœur.

L'expression « consiste essentiellement en » suivie d'une ou plusieurs caractéristiques, signifie que peuvent être inclus dans le procédé ou le matériau de l'invention, outre les composants ou étapes explicitement énumérés, des composants ou des étapes qui ne modifient pas significativement les propriétés et caractéristiques de l'invention.

L'expression « compris entre X et Y » inclut les bornes. Cette expression signifie donc que l'intervalle visé comprend les valeurs X, Y et toutes les valeurs allant de X à Y.

La composition selon l'invention permet d'obtenir des granules de matériau solide utilisable comme liant routier ou comme liant d'étanchéité, notamment de bitume, comprenant une couche de revêtement qui est résistante aux conditions climatiques et aux conditions de transport et/ou de stockage des liants routiers et/ou des liants d'étanchéité, en particulier qui est résistante aux conditions climatiques et aux conditions de transport et/ou de stockage du bitume routier solide, qui se casse facilement sous un effet de cisaillement mécanique, comme par exemple sous l'effet d'un cisaillement mécanique appliqué dans une cuve telle qu'un malaxeur ou un tambour-malaxeur lors de la fabrication d'enrobés.

Plus particulièrement, la couche de revêtement résiste au transport et/ou au stockage des liants routiers et/ou des liants d'étanchéité, en particulier du bitume, à température ambiante dans des « Big Bags » tout en étant cassante sous l'effet d'un cisaillement mécanique. Elle permet ainsi la libération du coeur en bitume lors de la fabrication d'enrobés.

### Le cœur des granules / première composition :

### Première variante :

Selon une première variante, les coeurs des granules de matériau utilisable comme liant routier ou comme liant d'étanchéité, sont préparés à partir d'une première composition de bitume comprenant une ou plusieurs bases bitumes.

De préférence, les granules de bitume sont préparés à partir d'une première composition de bitume comprenant :
- une ou plusieurs bases bitumes,
- de 0,1% à 5% en masse, de préférence de 0,5% à 4% en masse, plus préférentiellement de 0,5% à 2,5% en masse d'au moins un additif chimique,
les pourcentages étant en masse par rapport à la masse totale de base bitume.

La base bitume et l'additif chimique sont tels que décrits ci-dessous.

De préférence, les granules de bitume sont préparés à partir d'une première composition de bitume comprenant :
- une ou plusieurs bases bitumes,
- de 0,1% à 5% en masse, de préférence de 0,5% à 4% en masse, plus préférentiellement de 0,5% à 2,5% en masse d'au moins un additif chimique et,
- de 0,5% à 20% en masse, de préférence de 2% à 20% en masse, plus préférentiellement de 4% à 15% en masse d'au moins un agent anti-agglomérant,
les pourcentages étant en masse par rapport à la masse totale de base bitume.

Selon un second mode de réalisation préféré, les coeurs des granules sont préparés à partir d'une première composition comprenant :
- une ou plusieurs bases bitume,
- entre 0,1% et 5% en masse, de préférence entre 0,5% et 4% en masse, plus préférentiellement entre 0,5% et 2,5% en masse d'au moins un additif chimique,
- et entre 0,05% et 15% en masse, de préférence entre 0,1% et 10% en masse, plus préférentiellement entre 0,5% et 6% en masse d'au moins un adjuvant polymère oléfinique,
les pourcentages étant en masse par rapport à la masse totale de base bitume.

Selon un troisième mode de réalisation préféré, les coeurs des granules sont préparés à partir d'une première composition comprenant :
- une ou plusieurs bases bitume,
- entre 0,1% et 5% en masse, de préférence entre 0,5% et 4% en masse, plus préférentiellement entre 0,5% et 2,5% en masse d'au moins un additif chimique,
- et entre 0,05% et 15% en masse, de préférence entre 0,1% et 10% en masse, plus préférentiellement entre 0,5% et 6% en masse d'au moins un polymère,
les pourcentages étant en masse par rapport à la masse totale de base bitume.

Avantageusement, les différents modes de réalisation décrits ci-dessus pour les granules peuvent se combiner entre eux.

### Seconde variante :

Selon une seconde variante, les coeurs des granules de matériau utilisable comme liant routier ou comme liant d'étanchéité, sont préparés à partir d'une première composition comprenant au moins un brai.

Selon un premier mode de réalisation, les coeurs des granules sont constitués d'une première composition à base de brai.

Selon un second mode de réalisation, les coeurs des granules sont constitués d'une première composition à base de brai et d'au moins une base bitume.

Selon mode de réalisation de cette variante, la première composition comprend au moins un brai ayant une pénétrabilité à 25°C allant de 0 à 20 1/10 mm, une température de ramollissement bille et anneaux (TBA) allant de 115°C à 175°C, étant entendu que la pénétrabilité est mesurée selon la norme EN 1426 et que la TBA est mesurée selon la norme EN 1427.

Selon un mode de réalisation de cette variante, la première composition comprend :
- au moins un brai ayant une pénétrabilité à 25°C allant de 0 à 20 1/10 mm, une température de ramollissement bille et anneaux (TBA) allant de 115°C à 175°C, étant entendu que la pénétrabilité est mesurée selon la norme EN 1426 et que la TBA est mesurée selon la norme EN 1427,
- au moins une base bitume, et
- au moins un additif chimique.

### Troisième variante :

Selon une troisième variante, les granules de matériau utilisable comme liant routier ou comme liant d'étanchéité, sont préparés à partir d'une première composition comprenant au moins un liant clair.

Les liants bitumineux classiques, en raison de la présence d'asphaltènes, sont de couleur noire et sont donc difficilement colorables. Les revêtements colorés sont de plus en plus utilisés car ils permettent entre autres, d'améliorer la sécurité des usagers de la route en identifiant clairement les voies spécifiques telles que les voies piétonnes, les pistes cyclables, les voies de bus. Ils permettent aussi de matérialiser certaines zones de danger comme les entrées d'agglomération ou les virages dangereux. Les revêtements colorés favorisent la visibilité en condition de faible luminosité, par exemple la nuit ou dans des sites particuliers tels que les tunnels. Enfin, ils permettent tout simplement d'améliorer l'aspect esthétique de la voirie urbaine et peuvent être utilisés pour les places publiques, les cours d'immeubles et d'écoles, les trottoirs, les rues piétonnes, les allées de jardins et de parcs, les aires de parking et de repos.

Par conséquent, pour toutes les applications précitées, on préfère utiliser des liants clairs de synthèse, ne contenant pas d'asphaltènes et pouvant être colorés.

Selon cette variante, la première composition comprend au moins un liant clair.

Avantageusement, la première composition comprend au moins une base de liant clair et au moins un additif chimique choisi parmi un composé organique, une paraffine, un acide polyphosphorique et leurs mélanges.

Selon un mode de réalisation de l'invention, la première composition comprend de 0,1% à 5% en masse, de préférence de 0,5% à 4% en masse, plus préférentiellement de 0,5% à 2,5% en masse dudit additif chimique par rapport à la masse totale dudit liant clair additivé.

Selon un mode de réalisation de l'invention, la première composition comprend
- au moins une base de liant clair,
- entre 5% et 30% en masse, de préférence entre 6% et 28% en masse, plus préférentiellement entre 7% et 26% en masse du ou des additif(s) chimique(s) par rapport à la masse totale de ladite base de liant clair.

Dans ce cas la première composition est dite de liant clair concentré.

Selon un mode de réalisation préféré, les granules sont préparés à partir d'une première composition comprenant :
- une ou plusieurs bases de liant clair,
- de 30 à 40% d'au moins un polymère,
- de 4 à 6% d'au moins un agent compatibilisant,
- de 3% à 15% d'au moins un agent anti-agglomérant,
les pourcentages étant en masse par rapport à la masse totale de la première composition.

On entend par liant clair solide à froid et sous forme divisée, un liant clair solide à température ambiante qui est conditionné sous une forme divisée, c'est-à-dire sous forme d'unités distinctes les unes des autres, que l'on nomme granules.

Le liant clair selon l'invention est désigné indifféremment dans la présente description par « liant clair solide à froid et sous forme divisée » ou par « liant clair additivé ».

De préférence, le liant clair est une composition utilisable en substitution des liants à base de bitume pour la préparation par exemple d'enrobé bitumineux coloré. Un liant clair est exempt d'asphaltènes et peut donc garder la teinte naturelle du granulat auquel il est mélangé ou être aisément coloré à l'aide de pigments.

### La base bitume

Avantageusement, le noyau ou coeur des granules de bitume solide selon l'invention est préparé à partir d'une première composition, qui est une composition de bitume routier, ladite première composition étant préparée en mettant en contact :
- une ou plusieurs bases bitumes, et
- éventuellement au moins un additif chimique.

Au sens de l'invention, les termes « bitume » et « bitume routier » sont utilisés, de manière équivalente et indépendamment l'un de l'autre. Par « bitume » ou « bitume routier », on entend toutes compositions bitumineuses constituées d'une ou de plusieurs bases bitumes et comprenant éventuellement un ou plusieurs additifs chimiques, lesdites compositions étant destinées à une application routière.

Parmi les bases bitumes utilisables selon l'invention, on peut citer tout d'abord les bitumes d'origine naturelle, ceux contenus dans des gisements de bitume naturel, d'asphalte naturel ou les sables bitumineux et les bitumes provenant du raffinage du pétrole brut. Les bases bitumes selon l'invention sont avantageusement choisies parmi les bases bitumes provenant du raffinage du pétrole brut. Les bases bitumes peuvent être choisies parmi les bases bitumes ou mélanges de bases bitumes provenant du raffinage du pétrole brut, en particulier des bases bitumes contenant des asphaltènes ou des brais. Les bases bitumes peuvent être obtenues par des procédés conventionnels de fabrication des bases bitumes en raffinerie, en particulier par distillation directe et/ou distillation sous vide du pétrole. Ces bases bitumes peuvent être éventuellement viscoréduites et/ou désasphaltées et/ou rectifiées à l'air. Il est courant de procéder à la distillation sous vide des résidus atmosphériques provenant de la distillation atmosphérique de pétrole brut. Ce procédé de fabrication correspond, par conséquent, à la succession d'une distillation atmosphérique et d'une distillation sous vide, la charge alimentant la distillation sous vide correspondant aux résidus atmosphériques. Ces résidus sous vide issus de la tour de distillation sous vide peuvent être également utilisés comme bitumes. Il est également courant d'injecter de l'air dans une charge composée habituellement de distillats et de produits lourds provenant de la distillation sous vide de résidus atmosphériques provenant de la distillation du pétrole. Ce procédé permet d'obtenir une base soufflée, ou semi-soufflée ou oxydée ou rectifiée à l'air ou rectifiée partiellement à l'air.

Les différentes bases bitumes obtenues par les procédés de raffinage peuvent être combinées entre elles pour obtenir le meilleur compromis technique. La base bitume peut aussi être une base bitume de recyclage. Les bases bitumes peuvent être des bases bitumes de grade dur ou de grade mou.

Selon l'invention, pour les procédés conventionnels de fabrication des bases bitumes, on opère à des températures de fabrication comprises entre 100°C et 200°C, de préférence entre 140°C et 200°C, plus préférentiellement entre 140°C et 170°C, et sous agitation pendant une durée d'au moins 10 minutes, de préférence comprise entre 30 minutes et 10 heures, plus préférentiellement entre 1 heure et 6 heures. On entend par température de fabrication, la température de chauffage de la ou des bases bitumes avant mélange ainsi que la température de mélange. La température et la durée du chauffage varient selon la quantité de bitume utilisée et sont définies par la norme NF EN 12594.

Selon l'invention, les bitumes soufflés peuvent être fabriqués dans une unité de soufflage, en faisant passer un flux d'air et/ou d'oxygène à travers une base bitumineuse de départ. Cette opération peut être menée en présence d'un catalyseur d'oxydation, par exemple de l'acide phosphorique. Généralement, le soufflage est réalisé à des températures élevées, de l'ordre de 200 à 300°C, pendant des durées relativement longues typiquement comprises entre 30 minutes et 2 heures, en continu ou par lots. La durée et la température de soufflage sont ajustées en fonction des propriétés visées pour le bitume soufflé et en fonction de la qualité du bitume de départ.

Préférentiellement, la base bitume mise en oeuvre pour fabriquer les granules de l'invention présente une pénétrabilité à l'aiguille mesurée à 25°C selon la norme EN 1426 de 5 à 330 1/10 mm, de préférence de 10 à 220 1/10 mm.

De manière bien connue, la mesure dite de « pénétrabilité à l'aiguille » est réalisée au moyen d'un test normalisé NF EN 1426 à 25°C (P₂₅). Cette caractéristique de pénétrabilité est exprimée en dixièmes de millimètre (dmm ou 1/10 mm). La pénétrabilité à l'aiguille, mesurée à 25°C, selon le test normalisé NF EN 1426, représente la mesure de la pénétration dans un échantillon de bitume, au bout d'un temps de 5 secondes, d'une aiguille dont le poids avec son support est de 100 g. La norme NF EN 1426 remplace la norme homologuée NF T 66-004 de décembre 1986 avec effet au 20 décembre 1999 (décision du Directeur Général d'AFNOR en date du 20 novembre 1999).

### La base de liant clair

On entend par base de liant clair, des compositions comprenant un agent plastifiant, par exemple une huile d'origine pétrolière ou d'origine végétale, un agent structurant, par exemple une résine hydrocarbonée, et un polymère. La composition des bases de liants clairs détermine certaines propriétés essentielles de ces liants, en particulier l'indice de plasticité, la viscosité du liant, ou la couleur qui doit être la plus claire possible.

Selon un mode de réalisation de l'invention, la base de liant clair comprend :
- un agent plastifiant, par exemple une huile naturelle ou synthétique, dépourvue d'asphaltènes,
- un agent structurant, par exemple une résine hydrocarbonée ou végétale,
- un copolymère,
- les cas échéant, des agents dopants, ou dopes, ou dopes d'adhésivité.

Des compositions de liant clair sont décrites dans les demandes et brevets suivants et ces compositions de liant clair peuvent être mises en oeuvre comme base de liant clair dans la présente invention.

On peut utiliser comme base de liant clair un liant clair comprenant des huiles blanches hydrogénées comprenant au moins 60% de carbones paraffiniques (selon la méthode ASTM D2140), et une résine hydrocarbonée, le cas échéant en mélange avec des copolymères du type éthylène-acétate de vinyle (EVA) ou polyéthylène basse densité, par exemple du type EPDM (éthylène-propylène-diène-monomère), tel que décrit dans WO 01/53409.

On peut utiliser comme base de liant clair un liant clair comprenant une huile avec une teneur en naphténiques entre 35% et 80% et une résine hydrocarbonée, comme décrit dans EP 1783174.

On peut utiliser comme base de liant clair un liant clair comprenant une huile synthétique, une résine et un polymère de type SBS ou SIS, comme décrit dans EP 1473327.

On peut utiliser comme base de liant clair un liant clair comprenant :
- au moins une huile d'origine pétrolière, de préférence une huile aromatique comprenant des extraits aromatiques de résidus de pétrole, obtenus par extraction ou désaromatisation de résidus de distillations de coupes pétrolières,
- au moins une résine d'origine végétale, de préférence choisie parmi les esters de colophanes, les esters du glycérol et de colophanes, les esters du pentaérythritol et de colophanes, pris seuls ou en mélange, et
- au moins un latex, de préférence choisi parmi les latex de polymères acryliques, les latex de caoutchouc naturel, les latex de caoutchouc synthétiques, pris seuls ou en mélange, comme décrit dans WO 2009/150519.

On peut utiliser comme base de liant clair un liant synthétique clair comprenant :
- au moins une huile d'origine végétale de préférence choisie parmi les huiles de colza, de tournesol, de soja, de lin, d'olive, de palme, de ricin, de bois, de maïs, de courge, de pépins de raisin, de jojoba, de sésame, de noix, de noisette, d'amande, de karité, de macadamia, de coton, de luzerne, de seigle, de carthame, d'arachide, de coco et de coprah, et leurs mélanges,
- au moins une résine d'origine pétrolière, de préférence choisie parmi les résines d'origine pétrolière hydrocarbonées issues de la copolymérisation de coupes pétrolières aromatiques, aliphatiques, cyclopentadiéniques prises seules ou en mélange et,
- au moins un polymère, de préférence choisi parmi les copolymères de styrène et de butadiène, les copolymères de styrène et d'isoprène, les terpolymères éthylène/propène/diène, les polychloroprènes, les copolymères d'éthylène et d'acétate de vinyle, les copolymères d'éthylène et d'acrylate de méthyle, les copolymères d'éthylène et d'acrylate de butyle, les terpolymères éthylène/acrylate de méthyle/méthacrylate de glycidyle, les terpolymères éthylène/acrylate de butyle/anhydride maléique, les polypropylènes atactiques, pris seuls ou en mélanges,
la quantité d'huile d'origine végétale dans le liant étant supérieure ou égale à 10% en masse et la quantité de polymère dans le liant étant inférieure ou égale à 15% en masse, comme décrit dans WO 2010/055491.

Selon un autre mode de réalisation de l'invention, la base de liant clair comprend :
(i) un agent plastifiant constitué d'une huile contenant une teneur totale en composés paraffiniques, mesurée selon la méthode ASTM D2140, d'au moins 50%, de préférence d'au moins 60% en poids, plus préférentiellement comprise entre 50% et 90%, de préférence entre 60% et 80%, et
(ii) un copolymère à base de motifs diène conjugué et de motifs hydrocarbure monovinyl aromatique, par exemple à base de motif butadiène et de motifs styrène.

De préférence, l'huile est une huile synthétique issue des coupes d'unité de désasphaltage (ou « huile DAO »).

De préférence, l'huile contient une teneur totale en composés paraffiniques supérieure ou égale à 50%, de préférence supérieure ou égale à 60% en poids, et une teneur totale en composés naphténiques inférieure ou égale à 25% en poids, mesurée selon la méthode ASTM D2140.

De préférence, l'huile contient une teneur totale en composés paraffiniques supérieure ou égale à 50%, de préférence supérieure ou égale à 60% en poids, une teneur totale en composés naphténiques inférieure ou égale à 25% en poids, et une teneur totale en composés aromatiques inférieure ou égale à 25% en poids, mesurée selon la méthode ASTM D2140.

Par exemple, l'huile contient une teneur totale en composés paraffiniques, mesurée selon la méthode ASTM D2140, comprise entre 50% et 90%, de préférence entre 60% et 80% en poids, une teneur totale en composés naphténiques comprise entre 5% et 25% en poids, et une teneur totale en composés aromatiques comprise entre 5% et 25% en poids.

De préférence, l'huile a un point d'aniline, mesuré selon la norme ISO2977 : 1997, supérieur ou égal à 80°C, de préférence supérieur ou égal à 90 °C, par exemple supérieur à 100°C.

De préférence, la base de liant clair comprend de préférence (i) de 40 à 80% en poids d'agent plastifiant, (ii) de 18 à 50% en poids de résine, (iii) de 1 à 7% en poids de copolymère ; et, (iv) éventuellement de 0,05% à 0,5% en poids de dope d'adhésivité, par exemple d'amine, par rapport au poids de base de liant clair.

Avantageusement, la base de liant clair comprend de préférence (i) de 40 à 80% en poids d'agent plastifiant, (ii) de 18 à 50% en poids de résine, (iii) de 1 à 7% en poids de copolymère ; et, (iv) de 0,05% à 0,5% en poids de dope d'adhésivité, par exemple d'amine, par rapport au poids de base de liant clair.

Avantageusement, la base de liant clair comprend également (i) de 45% à 70% en poids d'agent plastifiant, (ii) de 25 à 50% en poids de résine, (iii) de 1% à 7% en poids de copolymère ; et, (iv) éventuellement de 0,1% et 0,3% en poids de dope d'adhésivité, par rapport au poids total de base de liant clair.

De préférence, la base de liant clair consiste essentiellement en (i) de 40 à 80% en poids d'agent plastifiant, (ii) de 20 à 50% en poids de résine, (iii) de 1 à 7% en poids de copolymère, par rapport au poids total de base de liant clair.

Avantageusement, la base de liant clair consiste essentiellement en (i) de 40 à 80% en poids d'agent plastifiant, (ii) de 20 à 50% en poids de résine, (iii) de 1 à 7% en poids de copolymère et (iv) de 0,05% à 0,5% en poids de dope d'adhésivité, par rapport au poids total de base de liant clair.

Avantageusement, la base de liant clair consiste essentiellement également en (i) de 45% à 70% en poids d'agent plastifiant, (ii) de 25 à 50% en poids de résine (iii) de 1% à 7% en poids de copolymère ; et, (iv) de 0,1% et 0,3% en poids de dope d'adhésivité, par rapport au poids total de base de liant clair.

De préférence, le copolymère est un copolymère à base de motifs de styrène et de butadiène qui comprend une teneur pondérale en butadiène 1-2 allant de 5 à 70%.

De préférence, le copolymère est avantageusement un copolymère à base de motifs de styrène et de butadiène qui comprend une teneur pondérale en butadiène 1-2 allant de 5 à 70% et une teneur pondérale en groupement 1,2-vinyle comprise entre 10 et 40%.

Par exemple, ledit copolymère à base de motifs de styrène et de butadiène a une masse moléculaire moyenne en masse comprise entre 10 000 et 500 000, de préférence entre 50 000 et 200 000, et plus préférentiellement entre 50 000 et 150 000 daltons. De préférence, on utilisera un copolymère bloc styrène/butadiène ou bloc styrène/butadiène/styrène.

Les liants clairs selon l'invention sont avantageusement caractérisés en ce qu'ils présentent un indice de couleur inférieur ou égal à 4, de préférence inférieur ou égal à 3, tel que déterminé selon l'échelle ASTM DH4.

En outre, ils peuvent avantageusement présenter une température de ramollissement Température Bille-Anneau déterminée selon la norme NF EN1427 comprise entre 55°C et 90°C.

De préférence, le liant clair utilisable selon l'invention a une pénétrabilité à 25°C, mesurée selon la norme NF EN 1426, comprise entre 10 et 220 1/10 mm, de préférence entre 30 et 100 1/10 mm, plus préférentiellement entre 40 et 80 1/10 mm. L'homme du métier peut moduler la pénétrabilité du liant clair utilisable dans l'invention notamment en choisissant judicieusement le rapport en poids [agent structurant/agent plastifiant] dans la composition de la base de liant clair. En effet, il est connu qu'une augmentation de ce rapport permet de diminuer la pénétrabilité à 25°C.

Les bases de liants clairs mises en œuvre dans l'invention peuvent être préparées par exemple selon le procédé suivant comprenant les étapes de :
(i) mélange de l'agent plastifiant, par exemple l'huile DAO, et chauffage à une température comprise entre 140-200°C, par exemple de 10 minutes à 30 minutes,
(ii) ajout de l'agent structurant, par exemple la résine hydrocarbonée, mélange et chauffage à une température comprise entre 140-200°C, par exemple de 30 minutes à 2 heures,
(iii) ajout du ou des polymères, par exemple le SBS, mélange et chauffage à une température comprise entre 140-200°C, par exemple, de 90 minutes à 3 heures, de préférence de 90 minutes à 2 heures 30,
(iv) ajout éventuel d'un dope d'adhésivité, mélange et chauffage à une température comprise entre 140-200°C, par exemple, de 5 minutes à 20 minutes.

L'ordre des étapes (i) à (iv) peut être modifié.

Selon un mode de réalisation de l'invention, les coeurs des granules de liant clair comprennent en outre au moins un agent colorant tel que décrit ci-dessus, comme par exemple un pigment.

Dans ces modes de réalisations, l'anti-agglomérant et/ou l'agent colorant sera choisi par l'homme du métier en fonction de la couleur du liant clair désiré.

### Le brai

Selon le dictionnaire français, on entend par « brai », un résidu de distillation des goudrons de pétrole, de pétrole, de houille, de bois ou d'autres molécules organiques.

L'invention porte ici sur les résidus de distillation du pétrole, également appelés « brai de pétrole ».

Au sens de l'invention, on utilisera indépendamment l'un de l'autre, les termes « brai », « brai de pétrole » et « brai de désasphaltage ».

Les brais peuvent être obtenus par des procédés conventionnels de fabrication en raffinerie. Le procédé de fabrication correspond à la succession d'une distillation atmosphérique et d'une distillation sous vide. Dans un premier temps, le pétrole brut est soumis à une distillation à pression atmosphérique, qui conduit à l'obtention d'une phase gazeuse, de différents distillats et d'un résidu de distillat atmosphérique. Puis, le résidu de la distillation atmosphérique est soumis lui-même à une distillation sous pression réduite, appelée distillation sous vide, qui permet de séparer un gazole lourd, diverses coupes de distillats et un résidu de distillation sous vide. Ce résidu de distillation sous vide contient du « brai de pétrole » en concentration variable.

Il est possible d'obtenir le « brai de pétrole » selon deux procédés :

### 1^{ère} procédé :

Le résidu de distillation sous vide est soumis à une opération de désalphatage par addition d'un solvant approprié, tel que le propane, qui permet ainsi de précipiter le brai et de le séparer des fractions légères telles que l'huile désaphaltée.

### 2^{nd} procédé :

Le résidu de distillation sous vide est soumis à une extraction au solvant, et plus précisément au furfural. Cet aldéhyde hétérocyclique présente la particularité de solubiliser sélectivement les composés aromatiques et polycycliques. Ce procédé permet ainsi d'éliminer les extraits aromatiques et de récupérer le « brai de pétrole ».

Selon un mode de réalisation, le brai est un brai oxydé.

De préférence, le brai oxydé selon l'invention est obtenu par oxydation d'un mélange comprenant du brai et un diluant, tel qu'une essence légère, également appelé « fluxant » soumis à une opération d'oxydation dans une tour de soufflage en présence d'un catalyseur, à une température fixée et à une pression donnée.

Par exemple, les brais oxydés peuvent être fabriqués dans une unité de soufflage, en faisant passer un flux d'air et/ou d'oxygène à travers un brai de départ. Cette opération peut être menée en présence d'un catalyseur d'oxydation, par exemple de l'acide phosphorique. Généralement, l'oxydation est réalisée à des températures élevées, de l'ordre de 200 à 300°C, pendant des durées relativement longues typiquement comprises entre 30 minutes et 2 heures, en continu ou par lots. La durée et la température d'oxydation sont ajustées en fonction des propriétés visées pour le brai oxydé et en fonction de la qualité du brai de départ.

Les qualités mécaniques des brais sont généralement appréciées en déterminant une série de caractéristiques mécaniques par des essais normalisés, dont les plus utilisés sont la pénétrabilité à l'aiguille exprimée en 1/10 mm et le point de ramollissement déterminé par l'essai bille et anneau, encore appelée température de ramollissement bille et anneau (TBA).

Selon un mode de réalisation de l'invention, le brai présente une pénétrabilité à l'aiguille à 25°C de 0 à 20 1/10 mm, de préférence de 0 à 15 1/10 mm, plus préférentiellement de 0 à 10 1/10 mm, étant entendu que la pénétrabilité est mesurée selon la norme EN 1426.

Selon un mode de réalisation de l'invention, le brai présente un point de ramollissement compris entre 115°C et 175°C. Parmi des exemples de brais utilisés dans l'invention, il y a des brais présentant respectivement un point de ramollissement compris entre 115°C et 125°C, entre 135 et 145°C ou encore entre 165 et 175°C.

### L'agent plastifiant

Par « agent plastifiant », on entend au sens de l'invention, un constituant chimique permettant de fluidifier et de réduire la viscosité et le module du liant obtenu.

Dans un mode de réalisation de l'invention, l'agent plastifiant est choisi parmi les huiles d'origine pétrolière, les huiles d'origine végétale et leurs mélanges.

Dans un mode de réalisation préféré de l'invention, les huiles d'origine végétale sont choisies parmi les huiles de colza, de tournesol, de soja, de lin, d'olive, de palme, de ricin, de bois, de maïs, de courge, de pépins de raisin, de jojoba, de sésame, de noix, de noisette, d'amande, de karité, de macadamia, de coton, de luzerne, de seigle, de carthame, d'arachide, de coco et de coprah, et leurs mélanges.

De préférence, les huiles d'origine végétale sont choisies parmi les huiles de colza, de tournesol, de lin, de coco, de soja, et leurs mélanges.

Dans un mode de réalisation préféré de l'invention, les huiles d'origine pétrolière sont choisies parmi les huiles aromatiques ou les huiles d'origine synthétique.

De préférence, les huiles aromatiques comprennent des extraits aromatiques de résidus de pétrole, obtenus par extraction ou désaromatisation de résidus de distillations de coupes pétrolières.

Plus préférentiellement, les huiles aromatiques ont une teneur en composés aromatiques comprise entre 30 et 95% en poids, avantageusement comprise entre 50 et 90% en poids, plus avantageusement comprise entre 60 et 85% en poids (méthode SARA : Saturés/Aromatiques/Résines/Asphaltènes).

Plus préférentiellement, les huiles aromatiques ont une teneur en composés saturés comprise entre 1 et 20% en poids, avantageusement comprise entre 3 et 15% en poids, plus avantageusement comprise entre 5 et 10% en poids (méthode SARA : Saturés/Aromatiques/Résines/Asphaltènes).

Plus préférentiellement, les huiles aromatiques ont une teneur en composés résiniques comprise entre 1 et 10% en poids, avantageusement comprise entre 3 et 5% en poids, (méthode SARA : Saturés/Aromatiques/Résines/Asphaltènes).

Dans un mode préféré de réalisation de l'invention, les huiles d'origine synthétique sont issues des coupes de désasphaltage de distillation sous pression réduite (résidu sous vide, RSV) de pétrole brut (ci-après dénommée « huile DAO »).

En particulier, dans un mode de réalisation préféré, l'agent plastifiant est constitué uniquement d'une huile DAO.

Les teneurs en composés paraffiniques, naphténiques et aromatiques mentionnées dans la présente demande sont déterminées selon la norme ASTM D2140, en % poids par rapport au poids de l'huile.

Dans un mode de réalisation spécifique, l'agent plastifiant est une huile, par exemple une huile DAO, contenant une teneur totale en composés paraffiniques d'au moins 50% en poids, de préférence d'au moins 60% en poids, par exemple comprise entre 50% et 90%, de préférence entre 60% et 90%, plus préférentiellement entre 50% et 80% et en particulier compris entre 55% et 70% ou en particulier compris entre 60% et 75%.

Dans un mode de réalisation plus spécifique, l'agent plastifiant est une huile, par exemple une huile DAO, contenant en outre une teneur totale en composés naphténiques qui n'excède pas 25%, par exemple comprise entre 5% et 25%, et en particulier compris entre 10% et 25%.

Dans un mode de réalisation plus spécifique, l'agent plastifiant est une huile, par exemple une huile DAO, contenant en outre une teneur totale en aromatiques qui n'excède pas 25%, par exemple comprise entre 5% et 25%, et en particulier compris entre 8% et 18%.

Dans un mode particulièrement préféré, l'agent plastifiant est une huile, par exemple une huile DAO, comprenant les teneurs respectives :
(i) une teneur totale en composés paraffiniques compris entre 50% et 90% ;
(ii) une teneur totale en composés naphténiques compris entre 5% et 25%, par exemple entre 15% et 25% ; et
(iii) une teneur totale en composés aromatiques compris entre 5% et 25%, par exemple entre 10% et 15%.

Dans un mode plus particulièrement préféré, l'agent plastifiant est une huile, par exemple une huile DAO, comprenant les teneurs respectives :
(i) une teneur totale en composés paraffiniques comprise entre 60% et 75% ;
(ii) une teneur totale en composés naphténiques comprise entre 5% et 25%, par exemple entre 15% et 25% ; et
(iii) une teneur totale en composés aromatiques compris entre 5% et 25%, par exemple entre 10% et 15%.

Des huiles répondant aux caractéristiques ci-dessus et utilisables pour la préparation du liant clair selon l'invention sont obtenues par les procédés de désasphaltage des résidus sous vide (RSV) issus du raffinage du pétrole, par exemple par un désasphaltage à l'aide d'un solvant en C₃ à C₆, de préférence au propane. Ces procédés de désasphaltages sont bien connus de l'homme du métier et sont décrits par exemple dans Lee et al 2014, Fuel Processing Technology 119 : 204-210 : Les résidus issus de la distillation sous vide (RSV) sont séparés selon leur poids moléculaire en présence de solvant C₃ à C₆ (par exemple le propane). L'huile dite DAO (« deasphalted oil ») ainsi obtenue est riche en paraffine, présente une très faible teneur en asphaltènes, a une température d'évaporation comprise entre 440°C et 750°C, et une gravité API bien supérieure à celle des résidus sous vide.

Les teneurs respectives en composés paraffiniques, naphténiques et aromatiques dépendent dans une certaine mesure de la nature du pétrole brut à l'origine de l'huile DAO et du processus de raffinage utilisé. L'homme du métier sait déterminer les teneurs respectives en composés paraffiniques, naphténiques et aromatiques d'une huile DAO par exemple à l'aide de la méthode de fractionnement SARA également décrite dans Lee et al 2014, Fuel Processing Technology 119 : 204-210 et ainsi sélectionner l'huile DAO appropriée pour la préparation du liant clair selon l'invention.

Dans un mode de réalisation, la quantité d'agent plastifiant mise en oeuvre dans le procédé de préparation de la base de liant clair est de 40% à 80%, de préférence de 45% à 70% en poids par rapport au poids total de base de liant clair.

### L'agent structurant

Par « agent structurant », on entend tout constituant chimique conférant des propriétés mécaniques et une cohésivité satisfaisante audit liant.

L'agent structurant utilisé dans le cadre de l'invention, est une résine, de préférence choisie parmi les résines d'origine pétrolière hydrocarbonée, par exemple issue de la copolymérisation de coupes pétrolières aromatiques, aliphatiques, cyclopentadiéniques, prises seules ou en mélange, de préférence issues de coupes pétrolières aromatiques. Par exemple, il peut s'agir d'une résine thermoplastique polycycloaliphatique, par exemple du type homopolymères de cyclopentadiène hydrogénés, à faible masse moléculaire.

Plus particulièrement, la résine hydrocarbonée du type des cyclopentanes a un point de ramollissement (ou température Bille-Anneau, TBA, selon la norme NF T 66-008) supérieur à 125°C, et un indice de couleur Gardner (selon la norme NF T 20-030) égal au maximum à 1.

D'autres exemples de résines utilisables comme agent structurant incluent, sans être limitatifs, les résines d'origine végétale obtenues à partir de végétaux et/ou de plantes. Elles peuvent être dites de récolte, c'est-à-dire récoltées à partir du végétal vivant. Elles peuvent être utilisées telles quelles, on parle alors de résines naturelles ou être transformées chimiquement, on parle alors de résines naturelles modifiées.

Parmi les résines de récolte, on trouve les résines accroïdes, le dammar, les colophanes naturelles, les colophanes modifiées, les esters de colophane et les résinates métalliques. Celles-ci peuvent être prises seules ou en mélange.

Parmi les colophanes naturelles, on peut citer les colophanes de gemme et de bois, en particulier de pin, et/ou de tall oil ou huile de tall. Ces colophanes naturelles peuvent être prises seules ou en mélange.

Parmi les colophanes modifiées, on peut citer les colophanes hydrogénées, les colophanes dismutées, les colophanes polymérisées et/ou les colophanes maléisées. Ces colophanes naturelles modifiées peuvent être prises seules ou en mélange, et subir un ou plusieurs traitements de dismutation, polymérisation et/ou maléisation.

Parmi les esters de colophanes, on peut citer les esters méthyliques de colophanes naturelles, les esters méthyliques de colophanes hydrogénées, les esters du glycérol et de colophanes naturelles, les esters du glycérol et de colophanes hydrogénées, les esters du glycérol et de colophanes dismutées, les esters du glycérol et de colophanes polymérisées, les esters du glycérol et de colophanes maléisées, les esters du pentaérythritol et de colophanes naturelles et les esters du pentaérythritol et de colophanes hydrogénées. Ces esters de colophanes peuvent être pris seuls ou en mélange et provenir de colophanes ayant subi un ou plusieurs traitements de dismutation, polymérisation et/ou maléisation.

Les esters du pentaérythritol et de colophanes naturelles et les esters du pentaérythritol et de colophanes hydrogénées sont les esters de colophanes préférés.

Parmi les résinates métalliques, on peut citer les carboxylates métalliques, par exemple de Ca, Zn, Mg, Ba, Pb, Co, obtenus à partir de colophanes naturelles ou de colophanes modifiées. On préfère les résinates de calcium, les résinates de zinc, les résinates mixtes calcium/zinc, pris seuls ou en mélange.

Le rapport en poids entre l'agent structurant et l'agent plastifiant mis en oeuvre pour la préparation du liant clair, est compris en général, de 0,3 à 1,5, par exemple de 0, 5 à 1.

Dans un mode de réalisation spécifique, la quantité d'agent structurant mise en oeuvre dans le procédé de préparation de la base de liant clair est de 25 à 50% en poids par rapport au poids total de base de liant clair.

### Le polymère

Le polymère mis en oeuvre dans la première composition est un copolymère à base de motifs diène conjugué et de motifs hydrocarbure monovinyl aromatique. Le diène conjugué est choisi de préférence parmi ceux comportant de 4 à 8 atomes de carbone par monomère, par exemple le butadiène, le 2-méthyl-1,3-butadiène (isoprène), le 2,3-diméthyl-1,3-butadiène, le 1,3-pentadiène et le 1,2-hexadiène, chloroprène, butadiène carboxylé, isoprène carboxylé, en particulier le butadiène et l'isoprène, et leurs mélanges.

L'hydrocarbure monovinyl aromatique est choisi de préférence parmi le styrène, l'o-méthyl styrène, le p-méthyl styrène, le p-tert-butylstyrène, le 2,3 diméthyl- styrène, le vinyl naphtalène, le vinyl toluène, le vinyl xylène, et analogues ou leurs mélanges, en particulier le styrène.

Plus particulièrement, le polymère consiste en un ou plusieurs copolymères choisis parmi les copolymères séquencés, de styrène et de butadiène, de styrène et d'isoprène, de styrène et de chloroprène, de styrène et de butadiène carboxylé ou encore de styrène et d'isoprène carboxylé. Un copolymère préféré est un copolymère à base de motifs butadiène et de motifs styrène tel que le copolymère bloc styrène/butadiène SB ou le copolymère bloc styrène/butadiène/styrène SBS.

Le copolymère de styrène et de diène conjugué, en particulier le copolymère de styrène et de butadiène, possède avantageusement une teneur pondérale en styrène allant de 5 à 50%, de préférence de 20 à 50%.

Le copolymère de styrène et de diène conjugué, en particulier le copolymère de styrène et de butadiène, possède avantageusement une teneur pondérale en butadiène (1-2 et 1-4) allant de 50 à 95%. Le copolymère de styrène et de diène conjugué, en particulier le copolymère de styrène et de butadiène, possède avantageusement une teneur pondérale en butadiène 1-2 allant de 5 à 70%, de préférence de 5 à 50%. Les motifs butadiène 1-2 sont les motifs qui résultent de la polymérisation via l'addition 1-2 des motifs butadiène.

La masse moléculaire moyenne en masse du copolymère de styrène et de diène conjugué, et notamment celle du copolymère de styrène et de butadiène, peut être comprise, par exemple, entre 10 000 et 500 000, de préférence entre 50 000 et 200 000 et plus préférentiellement de 50 000 à 150 000 daltons.

Dans un mode de réalisation spécifique, la quantité totale de polymère mis en oeuvre dans le procédé de l'invention est de 0,5 à 20% en masse, de préférence de 1 à 10%, de préférence de 1 à 7%, par exemple de 2% à 5% par rapport à la masse totale de base bitume, ou de liant clair.

Dans un autre mode de réalisation spécifique, la quantité totale de polymère mis en oeuvre dans le procédé de l'invention est de 20% à 50% en masse, par rapport à la masse totale de base bitume, ou par rapport à la masse totale de base de liant clair.

Dans ce cas, la première composition est dite solution-mère de composition bitume/polymère ou solution-mère de composition liant clair/polymère. Elle est destinée à être transportée et stockée sous forme concentrée, puis diluée avec la quantité voulue de base bitume ou de base de liant clair juste avant son utilisation comme liant routier ou comme liant de revêtement. On peut, selon l'invention, former des granules de solution-mère de bitume ou de liant clair, de façon à faciliter leur transport et leur stockage ainsi que leur manipulation à une température ambiante élevée.

Selon une variante de l'invention, le polymère est choisi parmi les polymères micronisés. De préférence, selon cette variante le polymère présente des particules de diamètre allant de 250 à 1000 µm, de préférence de diamètre allant de 400 à 600 µm.

### Agent compatibilisant

De préférence l'agent compatibilisant est choisi parmi les cires, par exemples les cires animales, les cires végétales, les cires minérales et leurs mélanges.

Les cires animales et végétales sont principalement composées de mélanges de dérivés d'acides gras (esters d'acides gras) tandis que les cires minérales sont des dérivés paraffiniques.

### Les dopes d'adhésivité

Pour améliorer l'affinité réciproque entre le liant et les granulats et en assurer la pérennité, des dopes d'adhésivité peuvent également être utilisés dans la première composition, en mélange avec les autres composants, notamment le liant clair, ou la base bitume ou le brai. II s'agit par exemple de composés tensioactifs azotés dérivés des acides gras (aminés, polyamines, alkyl-polymanne etc...).

Lorsqu'ils sont ajoutés à la première composition, les dopes d'adhésivité représentent en général entre 0,05% et 0,5% en poids par rapport au poids de liant clair ou de base bitume ou de brai. Par exemple, dans un mode de réalisation spécifique, on ajoutera de 0,05% à 0,5% d'amine, de préférence de 0,1% à 0,3% d'amine par rapport à la masse totale de base de liant clair ou de base bitume ou de brai.

### Les agents colorants

Le liant synthétique clair peut également comprendre un ou plusieurs agents colorants, tels que des pigments minéraux ou des colorants organiques. Les pigments sont sélectionnés suivant la teinte, la couleur souhaitée pour le revêtement. On utilisera par exemple des oxydes métalliques tels que des oxydes de fer, des oxydes de chrome, des oxydes de cobalt, des oxydes de titane pour obtenir les couleurs rouge, jaune, gris, vert bleu ou blanc. Les pigments peuvent être ajoutés, indifféremment dans le liant clair ou dans l'enrobé (en mélange avec les granulats par exemple) ou dans une émulsion du liant clair.

### L'additif chimique

La base bitume, le brai ou le liant clair peut en outre comprendre au moins un additif chimique choisi parmi : un composé organique, une paraffine, un acide polyphosphorique et leurs mélanges.

En particulier, lorsque le matériau solide comprend au moins un additif chimique, celui-ci est en quantité adaptée pour que sa pénétrabilité soit de préférence de 5 à 50 1/10mm et/ou que la température de ramollissement bille et anneau (TBA) soit, de préférence, supérieure ou égale à 60°C, étant entendu que la pénétrabilité est mesurée à 25°C selon la norme EN 1426 et la TBA selon la norme EN 1427.

Selon un premier mode de réalisation de l'invention, l'additif chimique est un composé organique. Avantageusement, le composé organique présente une masse molaire inférieure ou égale à 2000 gmol⁻¹, de préférence une masse molaire inférieure ou égale à 1000 gmol⁻¹.

Dans ce premier mode de réalisation, selon une première variante, le composé organique est un composé de formule générale (I) :

Ar1-R-Ar2 (I),

dans laquelle :
- Ar1 et Ar2 représentent indépendamment l'un de l'autre un noyau benzène ou un système de noyaux aromatiques condensés de 6 à 20 atomes de carbones, substitués par au moins un groupe hydroxyle, et
- R représente un radical divalent éventuellement substitué, dont la chaîne principale comprend de 6 à 20 atomes de carbone et au moins un groupe choisi parmi les fonctions amide, ester, hydrazide, urée, carbamate, anhydride.

De préférence, Ar1 et/ou Ar2 sont substitués par au moins un groupe alkyle de 1 à 10 atomes de carbone, avantageusement en une ou des positions *ortho* par rapport au(x) groupe(s) hydroxyle(s), plus préférentiellement Ar1 et Ar2 sont des groupes 3,5-dialkyl-4-hydroxyphényle, avantageusement des groupes 3,5-di-*tert*-butyl-4-hydroxyphényle.

De préférence, R est en position *para* par rapport à un groupe hydroxyle de Ar1 et/ou Ar2.

Avantageusement, le composé de formule (I) est le 2',3-bis[(3-[3, 5-di-*tert*-butyl-4-hydroxyphenyl]propionyl)]propionohydrazide.

Selon une seconde variante de ce premier mode de réalisation, le composé organique est un composé de formule générale (II) :

R'-(NH)ₙCONH-(X)ₘ-(NHCO)ₚ(NH)ₙ-R'' (II),

dans laquelle,
- les groupements R' et R", identiques ou différents, représentent une chaîne hydrocarbonée saturée ou insaturée, linéaire, ramifiée ou cyclique, comprenant de 1 à 22 atomes de carbone, et comprenant éventuellement des hétéroatomes tels que N, O, S, des cycles hydrocarbonés en C₅-C₂₄ et/ou des hétérocycles hydrocarbonés en C₄-C₂₄ comprenant un ou plusieurs hétéroatomes tels que N, O, S, et R" peut être H ;
- le groupement X représente une chaîne hydrocarbonée, saturée ou insaturée, linéaire, cyclique ou ramifiée, comprenant de 1 à 22 atomes de carbone, éventuellement substituée, et comprenant éventuellement des hétéroatomes, tels que N, O, S, des cycles hydrocarbonés en C₅-C₂₄ et/ou des hétérocycles hydrocarbonés en C₄-C₂₄ comprenant un ou plusieurs hétéroatomes tels que N, O, S ;
- n, m et p sont des entiers ayant une valeur de 0 ou 1 indépendamment les uns des autres.

Selon cette variante, lorsque l'entier m a une valeur de 0 et lorsque l'entier p a une valeur de 1, alors les groupements R'-(NH)ₙCONH et NHCO(NH)ₙ-R" sont liés de façon covalente par une liaison hydrazide CONH-NHCO. Le groupement R', ou le groupement R", comprend alors au moins un groupement choisi parmi : une chaîne hydrocarbonée d'au moins 4 atomes de carbone, un cycle aliphatique de 3 à 8 atomes, un système polycyclique condensé aliphatique, partiellement aromatique ou entièrement aromatique, chaque cycle comprenant 5 ou 6 atomes.

Toujours selon cette variante, lorsque l'entier m a une valeur de 1, alors le groupement R', le groupement R" et/ou le groupement X, comprend au moins un groupement choisi parmi : une chaîne hydrocarbonée d'au moins 4 atomes de carbone, un cycle aliphatique de 3 à 8 atomes, un système polycyclique condensé aliphatique, partiellement aromatique ou entièrement aromatique, chaque cycle comprenant 5 ou 6 atomes.

De préférence, le groupement R' et/ou R" comprend une chaîne hydrocarbonée aliphatique de 4 à 22 atomes de carbone, notamment, choisie parmi les groupements C₄H₉, C₅H₁₁, C₉H₁₉, C₁₁H₂₃, C₁₂H₂₅, C₁₇H₃₅, C₁₈H₃₇, C₂₁H₄₃, C₂₂H₄₅.

De préférence, le groupement X représente une chaîne hydrocarbonée linéaire, saturée comprenant de 1 à 22 atomes de carbone, avantageusement X représente une chaîne hydrocarbonée linéaire, saturée comprenant de 1 à 12 atomes de carbone, encore mieux de 1 à 4 atomes de carbone. De préférence, le groupement X est choisi parmi les groupements C₂H₄, C₃H₆.

De préférence, le groupement X peut aussi être un groupement cyclohexyl ou un groupement phényl, les radicaux R'-(NH)ₙCONH- et -NHCO(NH)ₙ-R" peuvent alors être en position ortho, méta ou para. Par ailleurs, les radicaux R'-(NH)ₙCONH- et -NHCO(NH)ₙ-R" peuvent être en position cis ou trans l'un par rapport à l'autre. De plus, lorsque le radical X est cyclique, ce cycle peut être substitué par d'autres groupements que les deux groupements principaux R'-(NH)ₙCONH- et -NHCO(NH)ₙ-R".

De préférence, le groupement X comprend deux cycles de 6 carbones reliés par un groupement CH₂, ces cycles étant aliphatiques ou aromatiques. Dans ce cas, le groupement X est un groupement comportant deux cycles aliphatiques reliés par un groupement CH₂ éventuellement substitué comme par exemple : 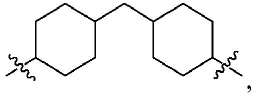 ou

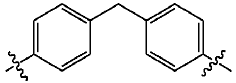

Avantageusement, selon cette variante, le composé organique est un composé de formule générale (II) choisi parmi :
- les dérivés hydrazides tels que les composés C₅H₁₁-CONH-NHCO-C₅H₁₁, C₉H₁₉-CONH-NHCO-C₉H₁₉, C₁₁H₂₃-CONH-NHCO-C₁₁H₂₃, C₁₇H₃₅-CONH-NHCO-C₁₇H₃₅, ou C₂₁H₄₃-CONH-NHCO-C₂₁H₄₃ ;
- les diamides tels que le N,N'-éthylènedi(laurylamide) de formule CₙH₂₃-CONH-CH₂-CH₂-NHCO-C₁₁H₃₁, le N,N'-éthylènedi(myristylamide) de formule C₁₃H₂₇-CONH-CH₂-CH₂-NHCO-C₁₃H₂₇, le N,N'-éthylènedi(palmitamide) de formule C₁₅H₃₁-CONH-CH₂-CH₂-NHCO-C₁₅H₃₁, leN,N'-éthylènedi(stéaramide) de formule C₁₇H₃₅-CONH-CH₂-CH₂-NHCO-C₁₇H₃₅ ;
- les monoamides tels que le laurylamide de formule C₁₁H₂₃-CONH₂, le myristylamide de formule C₁₃H₂₇-CONH₂, le palmitamide de formule C₁₅H₃₁-CONH₂, le stéaramide de formule C₁₇H₃₅-CONH₂ ;
- les dérivés uréides tels que la 4,4'-bis(dodécylaminocarbonylamino)diphénylmethane de formule C₁₂H₂₅-NHCONH-C₆H₄-CH₂-C₆H₄-NHCONH-C₁₂H₂₅.

De préférence, le composé de formule générale (II) est choisi parmi ceux qui satisfont à la condition n = 0.

De préférence, le composé de formule générale (II) est choisi parmi ceux qui satisfont à la condition : la somme des nombres des atomes de carbone de R', X et R" est supérieur ou égal à 10, avantageusement supérieur ou égal à 14, de préférence supérieur ou égal à 18.

De préférence, le composé de formule générale (II) est choisi parmi ceux qui satisfont à la condition : le nombre des atomes de carbone de l'un au moins de R' et R" est supérieur ou égal à 10, avantageusement supérieur ou égal à 12, de préférence supérieur ou égal à 14.

De préférence, selon une première variante, le composé de formule générale (II) est choisi parmi ceux de formule (IIA) :

R'-CONH-(X)ₘ-NHCO-R" (IIA)

dans laquelle R', R", m et X ont la même définition que ci-dessus.

De préférence, dans la formule (IIA) lorsque m= 1, le groupement X représente une chaîne hydrocarbonée linéaire, saturée comprenant de 1 à 22 atomes de carbone, avantageusement X représente une chaîne hydrocarbonée linéaire, saturée comprenant de 1 à 12 atomes de carbone, encore mieux de 1 à 4 atomes de carbone. De préférence, le groupement X est choisi parmi les groupements C₂H₄, C₃H₆.

De préférence, le composé de formule générale (IIA) est choisi parmi ceux qui satisfont à la condition : la somme des nombres des atomes de carbone de R', X et R" est supérieure ou égale à 10, avantageusement supérieure ou égale à 14, de préférence supérieure ou égale à 18.

De préférence, le composé de formule générale (IIA) est choisi parmi ceux qui satisfont à la condition : le nombre des atomes de carbone de l'un au moins de R' et R" est supérieur ou égal à 10, avantageusement supérieur ou égal à 12, de préférence supérieur ou égal à 14.

Plus préférentiellement, selon cette variante, le composé de formule générale (IIA) est choisi parmi les dérivés hydrazides tels que les composés C₅H₁₁-CONH-NHCO-C₅H₁₁, C₉H₁₉-CONH-NHCO-C₉H₁₉, C₁₁H₂₃-CONH-NHCO-C₁₁H₂₃, C₁₇H₃₅-CONH-NHCO-C₁₇H₃₅, ou C₂₁H₄₃-CONH-NHCO-C₂₁H₄₃ ; les diamides telles que le N,N'-éthylènedi(laurylamide) de formule C₁₁H₂₃-CONH-CH₂-CH₂-NHCO-C₁₁H₃₁, le N,N'-éthylènedi(myristylamide) de formule C₁₃H₂₇-CONH-CH₂-CH₂-NHCO-C₁₃H₂₇, le N,N'-éthylènedi(palmitamide) de formule C₁₅H₃₁-CONH-CH₂-CH₂-NHCO-C₁₅H₃₁, le N,N'-éthylènedi(stéaramide) de formule C₁₇H₃₅-CONH-CH₂-CH₂-NHCO-C₁₇H₃₅ ; les mono amides telles que le laurylamide de formule C₁₁H₂₃-CONH₂, le myristylamide de formule C₁₃H₂₇-CONH₂, le palmitamide de formule C₁₅H₃₁-CONH₂, le stéaramide de formule C₁₇H₃₅-CONH₂.

De façon encore plus avantageuse, le composé de formule générale (IIA) est le N,N'-éthylènedi(stéaramide) de formule C₁₇H₃₅-CONH-CH₂-CH₂-NHCO-C₁₇H₃₅.

De préférence, selon une seconde variante, le composé de formule générale (II) est choisi parmi ceux de formule (IIB) :

R'-CONH-R" (IIB)

dans laquelle R' et R" ont la même définition que ci-dessus.

Avantageusement, selon cette variante, la somme des nombres des atomes de carbone de R' et R" est supérieur ou égal à 10, avantageusement supérieur ou égal à 14, de préférence supérieur ou égal à 18.

Encore plus avantageusement, selon cette variante, le nombre des atomes de carbone de R' est supérieur ou égal à 10, avantageusement supérieur ou égal à 12, de préférence supérieur ou égal à 14, et R" = H.

Avantageusement, le composé de formule générale (II) est choisi parmi les dérivés hydrazides tels que les composés C₅H₁₁-CONH-NHCO-C₅H₁₁, C₉H₁₉-CONH-NHCO-C₉H₁₉, C₁₁H₂₃-CONH-NHCO-C₁₁H₂₃, C₁₇H₃₅-CONH-NHCO-C₁₇H₃₅, ou C₂₁H₄₃-CONH-NHCO-C₂₁H₄₃ ; les diamides telles que le N,N'-éthylènedi(laurylamide) de formule C₁₁H₂₃-CONH-CH₂-CH₂-NHCO-C₁₁H₃₁, le N,N'-éthylènedi(myristylamide) de formule C₁₃H₂₇-CONH-CH₂-CH₂-NHCO-C₁₃H₂₇, le N,N'-éthylènedi(palmitamide) de formule C₁₅H₃₁-CONH-CH₂-CH₂-NHCO-C₁₅H₃₁, le N,N'-éthylènedi(stéaramide) de formule C₁₇H₃₅-CONH-CH₂-CH₂-NHCO-C₁₇H₃₅ ; les mono amides telles que le laurylamide de formule C₁₁H₂₃-CONH₂, le myristylamide de formule C₁₃H₂₇-CONH₂, le palmitamide de formule C₁₅H₃₁-CONH₂, le stéaramide de formule C₁₇H₃₅-CONH₂.

De façon encore plus avantageuse, le composé de formule générale (II) est le N,N'-éthylènedi(stéaramide) de formule C₁₇H₃₅-CONH-CH₂-CH₂-NHCO-C₁₇H₃₅.

De préférence, lorsque l'additif chimique est choisi parmi les composés organiques de formule (II), il est utilisé en combinaison avec au moins un autre additif chimique choisi parmi les composés organiques de formule (I), (III), (V), (VI) et (VII) et/ou les produits de réaction d'au moins un polyol en C₃-C₁₂ et d'au moins un aldéhyde en C₂-C₁₂, notamment ceux comprenant un groupement de formule (IV).

Selon une troisième variante de ce mode de réalisation, le composé organique est un composé de formule (III) :

(R-NHCO)ₓ-Z-(NHCO-R')_{y} (III),

dans laquelle,
- R et R', identiques ou différents, contiennent une chaîne hydrocarbonée saturée ou insaturée, linéaire, ramifiée ou cyclique comprenant de 1 à 22 atomes de carbone, éventuellement substituée, et éventuellement comprenant des hétéroatomes, des cycles et/ou des hétérocycles,
- Z représente un groupement tri-fonctionnalisé choisi parmi les groupements suivants : 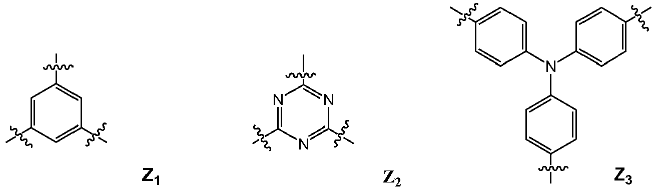
- x et y sont des entiers différents de valeur variant de 0 à 3 et tels que x+y=3.

De préférence, lorsque x est égal à 0 et Z représente Z₂, le composé de formule (III) est la N2, N4, N6-tridécylmélamine ayant la formule suivante avec R' représentant le groupe C₉H₁₉:

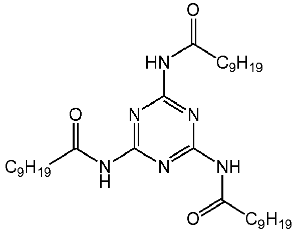

D'autres composés préférés répondant à la formule (III), sont tels que x est égal à 0, Z représente Z₂ et R' représente une chaîne hydrocarbonée saturée, linéaire, de 1 à 22 atomes de carbone, de préférence de 2 à 18 atomes de carbone, de préférence de 5 à 12 atomes de carbone.

D'autres composés préférés répondant à la formule (III) sont tels que : y est égal à 0 et Z représente Z₁, les composés ont alors pour formule : 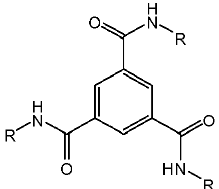 avec R choisi parmi les groupes suivants, pris seuls ou en mélanges :

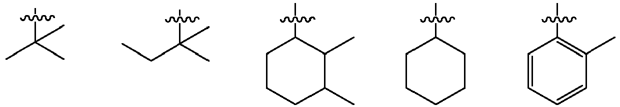

D'autres composés préférés répondant à la formule (III) sont tels que : y est égal à 0, Z représente Z₁ et R représente une chaîne hydrocarbonée saturée, linéaire, de 1 à 22 atomes de carbone, de préférence de 8 à 12 atomes de carbone.

Selon une quatrième variante de ce mode de réalisation, le composé organique est un produit de réaction d'au moins un polyol en C₃-C₁₂ et d'au moins un aldéhyde en C₂-C₁₂. Parmi les polyols utilisables, on peut citer le sorbitol, le xylitol, le mannitol et/ou le ribitol. De préférence, le polyol est le sorbitol.

Avantageusement, selon cette variante, le composé organique est un composé qui comprend au moins une fonction de formule générale (IV) :

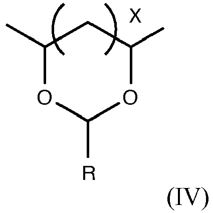

Avec :
- x est un entier,
- R est choisi parmi un radical alkyle, alcényle, aryle, ou aralkyle en C₁-C₁₁, éventuellement substitué par un ou plusieurs atomes d'halogène, un ou plusieurs groupements alcoxy en C₁-C₆.

Le composé organique est avantageusement un dérivé du sorbitol. Par « dérivé du sorbitol », on entend tout produit de réaction, obtenu à partir du sorbitol. En particulier, tout produit de réaction obtenu en faisant réagir un aldéhyde avec du D-sorbitol. On obtient par cette réaction de condensation, des acétals de sorbitol, qui sont des dérivés du sorbitol. Le 1,3:2,4-Di-O-benzylidène-D-sorbitol est obtenu en faisant réagir 1 mole de D-sorbitol et 2 moles de benzaldéhyde et a pour formule :

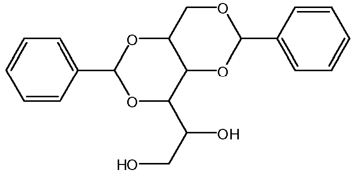

Les dérivés du sorbitol pourront ainsi être tous les produits de condensation d'aldéhydes, notamment d'aldéhydes aromatiques avec le sorbitol. On obtiendra alors des dérivés du sorbitol de formule générale : 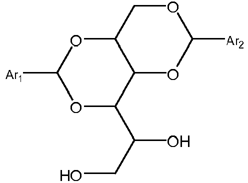 où Ar₁ et Ar₂ sont des noyaux aromatiques éventuellement substitués.

Parmi les dérivés du sorbitol, autre que le 1,3:2,4-Di-O-benzylidene-D-sorbitol on peut trouver par exemple le 1,3:2,4:5,6-tri-O-benzylidene-D-sorbitol, le 2,4-mono-O-benzylidene-D-sorbitol, le 1,3:2,4-bis(p-methylbenzylidene) sorbitol, 1,3:2,4-bis(3,4-dimethylbenzylidene) sorbitol, 1,3:2,4-bis(p-ethylbenzylidene) sorbitol, 1,3:2,4-bis(p-propylbenzylidene) sorbitol, 1,3:2,4-bis(p-butylbenzylidene) sorbitol, 1,3:2,4-bis(p-ethoxylbenzylidene) sorbitol, 1,3:2,4-bis(p-chlorobenzylidene) sorbitol, 1,3:2,4-bis(p-bromobenzylidene) sorbitol, 1,3:2,4-Di-O-methylbenzylidene-D-sorbitol, 1,3:2,4-Di-O-dimethylbenzylidene-D-sorbitol, 1,3:2,4-Di-O-(4-methylbenzylidene)-D-sorbitol, 1,3:2,4-Di-O-(4,3-dimethylbenzylidene)-D-sorbitol. De préférence, selon cette variante, le composé organique est le 1,3:2,4-Di-O-benzylidene-D-sorbitol.

Selon une cinquième variante de ce mode de réalisation, le composé organique est un composé de formule générale (V) :

R"-(COOH)_{z} (V),

dans laquelle R" représente une chaîne linéaire ou ramifiée, saturée ou insaturée comprenant de 4 à 68 atomes de carbone, de préférence de 4 à 54 atomes de carbone, plus préférentiellement de 4 à 36 atomes de carbone et z est un entier variant de 2 à 4.

De préférence, le groupement R" est une chaîne linéaire saturée de formule C_{w}H_{2w} avec w un entier variant de 4 à 22, de préférence de 4 à 12.

Selon cette variante de l'invention, les composés organiques répondant à la formule (V) peuvent être des diacides (z = 2), des triacides (z = 3) ou des tétracides (z = 4). Les composés organiques préférés selon cette variante, sont des diacides avec z = 2.

De préférence, selon cette variante, les diacides ont pour formule générale HOOC-C_{w}H_{2w}-COOH avec w un entier variant de 4 à 22, de préférence de 4 à 12 et où z = 2 et R" = C_{w}H_{2w}.

Avantageusement, selon cette variante, le composé organique est un diacide choisi parmi l'acide adipique ou acide 1,6-hexanedioïque avec w = 4, l'acide pimélique ou acide 1,7-heptanedioïque avec w = 5, l'acide subérique ou acide 1,8-octanedioïque avec w = 6, l'acide azélaique ou acide 1,9-nonanedioïque avec w = 7, l'acide sébacique ou acide 1,10-décanedioïque avec w = 8, l'acide undécanedioïque avec w = 9, l'acide 1,2-dodécanedioïque avec w = 10 ou l'acide tétradécanedioïque avec w = 12.

Avantageusement, le diacide est l'acide sébacique.

Les diacides peuvent aussi être des dimères diacides d'acide(s) gras insaturé(s) c'est-à-dire des dimères formés à partir d'au moins un acide gras insaturé, par exemple à partir d'un seul acide gras insaturé ou à partir de deux acides gras insaturés différents. Les dimères diacides d'acide(s) gras insaturé(s) sont classiquement obtenus par réaction de dimérisation intermoléculaire d'au moins un acide gras insaturé (réaction de Diels Alder par exemple). De préférence, on dimérise un seul type d'acide gras insaturé. Ils dérivent en particulier de la dimérisation d'un acide gras insaturé notamment en C₈ à C₃₄, notamment en C₁₂ à C₂₂, en particulier en C₁₆ à C₂₀, et plus particulièrement en C₁₈. Un dimère d'acide gras préféré est obtenu par dimérisation de l'acide linoléïque, celui-ci pouvant ensuite être partiellement ou totalement hydrogéné. Un autre dimère d'acide gras préféré a pour formule HOOC-(CH₂)₇-CH=CH-(CH₂)₇-COOH. Un autre dimère d'acide gras préféré est obtenu par dimérisation du linoléate de méthyle. De la même façon, on peut trouver des triacides d'acides gras et des tétracides d'acides gras, obtenus respectivement par trimérisation et tétramérisation d'au moins un acide gras.

Selon une sixième variante de ce mode de réalisation, le composé organique est un composé de formule générale (VI) : 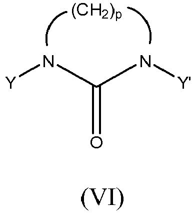 dans laquelle,
- les groupements Y et Y' représentent indépendamment l'un de l'autre, un atome ou groupement choisi parmi : H, -(CH₂)_{q}-CH₃, -(CH₂)_{q}-NH₂, -(CH₂)_{q}-OH, -(CH₂)_{q}-COOH ou 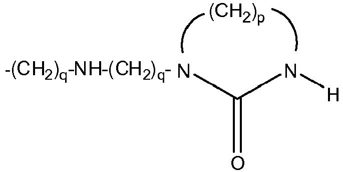
avec q un entier variant de 2 à 18, de préférence de 2 à 10, de préférence de 2 à 4 et p un entier supérieur ou égal à 2, de préférence ayant une valeur de 2 ou 3.

Parmi les composés organiques préférés répondant à la formule (VI), on peut citer les composés suivants :

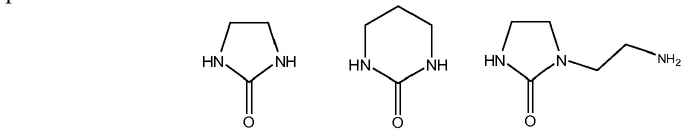

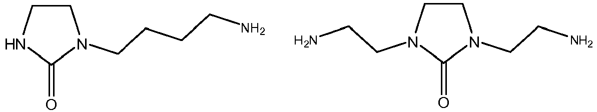

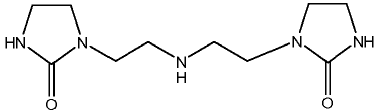

De préférence, selon cette variante, le composé organique de formule générale (VI) est :

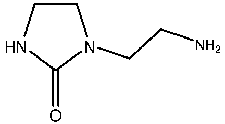

Selon une septième variante de ce mode de réalisation, le composé organique est un composé de formule générale (VII) :

R-NH-CO-CO-NH-R' (VII)

dans laquelle, R et R', identiques ou différents, représentent une chaîne hydrocarbonée saturée ou insaturée, linéaire, ramifiée ou cyclique, comprenant de 1 à 22 atomes de carbone, de préférence de 8 à 12 atomes de carbone, éventuellement substituée, et comprenant éventuellement des hétéroatomes, des cycles et/ou des hétérocycles.

Selon un autre mode de réalisation de l'invention, l'additif chimique est une paraffine. Les paraffines présentent des longueurs de chaînes de 30 à 120 atomes de carbone (C₃₀ à C₁₂₀). Les paraffines sont avantageusement choisies parmi les polyalkylènes. De préférence, on utilisera selon l'invention des paraffines de polyméthylène et des paraffines de polyéthylène. Ces paraffines pourront être d'origine pétrolière ou provenir de l'industrie chimique. Avantageusement, les paraffines utilisées sont des paraffines synthétiques issues de la conversion de la biomasse et/ou du gaz naturel.

De préférence, ces paraffines contiennent une grande proportion de paraffines dites « normales » c'est-à-dire de paraffines linéaires à chaîne droite, non ramifiées (hydrocarbures saturés). Ainsi, les paraffines peuvent comprendre de 50 à 100% de paraffines normales et de 0 à 50% d'isoparaffines et/ou de paraffines ramifiées. Plus préférentiellement, les paraffines comprennent de 85 à 95% de paraffines normales et de 5 à 15% d'isoparaffines et/ou de paraffines ramifiées. Avantageusement, les paraffines comprennent de 50 à 100% de paraffines normales et de 0 à 50% d'isoparaffines. Encore plus avantageusement, les paraffines comprennent de 85 à 95% de paraffines normales et de 5 à 15% d'isoparaffines.

De préférence, les paraffines sont des paraffines de polyméthylène. Plus particulièrement, les paraffines sont des paraffines synthétiques de polyméthylène, par exemple des paraffines issues de la conversion de gaz de synthèse par le procédé Fischer-Tropsch. Dans le procédé Fischer-Tropsch, les paraffines sont obtenues par réaction de l'hydrogène avec de l'oxyde de carbone sur un catalyseur métallique. Des procédés de synthèse Fischer-Tropsch sont décrits par exemple dans les publications EP 1 432 778, EP 1 328 607 ou EP 0 199 475.

Selon un autre mode de réalisation de l'invention, l'additif chimique est un acide polyphosphorique. Les acides polyphosphoriques (PPA) utilisables dans l'invention sont décrits dans WO 97/14753. Ce sont des composés de formule brute P_{q}HᵣOₛ dans laquelle q, r et s sont des nombres positifs tels que :
q ≥ 2 et notamment q va de 3 à 20 ou plus et que 5q+r-2s=0.

En particulier, lesdits acides polyphosphoriques peuvent être des composés linéaires de formule brute P_{q}H_{(q+2)}O_{(3q+1)} correspondant à la formule développée :

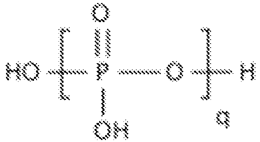

Où q a la définition donnée ci-dessus. Ils peuvent encore être des produits de structure bidimensionnelle ou tridimensionnelle.

Tous ces acides polyphosphoriques peuvent être considérés comme des produits de polycondensation par chauffage de l'acide métaphosphorique aqueux.

On ne sortira pas du cadre de l'invention en combinant plusieurs additifs chimiques différents tels que différents composés organiques de formule (I), (II), (III), (V), (VI) et (VII), les produits de réaction d'au moins un polyol en C₃-C₁₂ et d'au moins un aldéhyde en C₂-C₁₂, notamment ceux comprenant un groupement de formule (IV), et/ou différentes paraffines et/ou différents acides polyphosphoriques dans le matériau utilisable comme liant routier ou comme liant d'étanchéité.

Avantageusement, lorsqu'un additif chimique est utilisé dans le matériau utilisable comme liant routier ou comme liant d'étanchéité, il est choisi parmi les composés de formule (I), les composés de formule (II), les composés de formule (V) et les mélanges de ces composés.

Encore plus avantageusement, lorsqu'un additif chimique est utilisé dans le matériau utilisable comme liant routier ou comme liant d'étanchéité, il est choisi parmi :
- le 2',3-bis[(3-[3, 5-di-*tert*-butyl-4-hydroxyphényl]propionyl)]propionohydrazide,
- l'acide sébacique,
- les dérivés hydrazides tels que : C₅H₁₁-CONH-NHCO-C₅H₁₁, C₉H₁₉-CONH-NHCO-C₉H₁₉, C₁₁H₂₃-CONH-NHCO-C₁₁H₂₃, C₁₇H₃₅-CONH-NHCO-C₁₇H₃₅, ou C₂₁H₄₃-CONH-NHCO-C₂₁H₄₃;
- les diamides tels que le N,N'-éthylènedi(laurylamide) de formule C₁₁H₂₃-CONH-CH₂-CH₂-NHCO-C₁₁H₃₁, le N,N'-éthylènedi(myristylamide) de formule C₁₃H₂₇-CONH-CH₂-CH₂-NHCO-C₁₃H₂₇, le N,N'-éthylènedi(palmitamide) de formule C₁₅H₃₁-CONH-CH₂-CH₂-NHCO-C₁₅H₃₁, le N,N'-éthylènedi(stéaramide) de formule C₁₇H₃₅-CONH-CH₂-CH₂-NHCO-C₁₇H₃₅;
- les monoamides tels que le laurylamide de formule C₁₁H₂₃-CONH₂, le myristylamide de formule C₁₃H₂₇-CONH₂, le palmitamide de formule C₁₅H₃₁-CONH₂, le stéaramide de formule C₁₇H₃₅-CONH₂,
et les mélanges de ces composés.

De façon encore préférée, lorsqu'un additif chimique est utilisé dans le matériau utilisable comme liant routier ou comme liant d'étanchéité, il est choisi parmi :
- le 2',3-bis[(3-[3, 5-di-*tert*-butyl-4-hydroxyphényl]propionyl)]propionohydrazide,
- l'acide sébacique,
- et les mélanges de ces composés.

Selon un autre mode de réalisation préféré, lorsqu'un additif chimique est utilisé dans le matériau utilisable comme liant routier ou comme liant d'étanchéité, il est choisi parmi :
- les diamides, tels que le N,N'-éthylènedi(laurylamide) de formule C₁₁H₂₃-CONH-CH₂-CH₂-NHCO-C₁₁H₃₁, le N,N'-éthylènedi(myristylamide) de formule C₁₃H₂₇-CONH-CH₂-CH₂-NHCO-C₁₃H₂₇, le N,N'-éthylènedi(palmitamide) de formule C₁₅H₃₁-CONH-CH₂-CH₂-NHCO-C₁₅H₃₁, leN,N'-éthylènedi(stéaramide) de formule C₁₇H₃₅-CONH-CH₂-CH₂-NHCO-C₁₇H₃₅
- l'acide sébacique,
- et les mélanges de ces composés.

Selon un mode de réalisation de l'invention, la première composition, comprenant par exemple une base bitume, dont est composé le coeur des granules comprend de 0,1% à 10% en masse, de préférence de 0,5% à 5% en masse, plus préférentiellement de 0,5% à 2,5% en masse d'additif chimique par rapport à la masse totale de la première composition.

Selon un mode de réalisation avantageux, la première composition comprend au moins deux additifs chimiques.

Selon une première variante de ce mode de réalisation, la première composition comprend au moins un premier additif chimique de formule (V) et au moins un second additif chimique choisi parmi : les additifs chimiques de formule (I) ; les additifs chimiques de formule (II) ; les additifs chimiques de formule (III) ; les additifs chimiques de formule (V) ; les additifs chimiques de formule (VI) ; les additifs chimiques de formule (VII) et les produits de réaction d'au moins un polyol en C₃-C₁₂ et d'au moins un aldéhyde en C₂-C₁₂, notamment ceux comprenant un groupement de formule (IV), le second additif chimique étant distinct du premier additif chimique.

De préférence, et selon cette première variante, la première composition comprend au moins un premier additif chimique de formule (V) et au moins un second additif chimique de formule (II).

Plus préférentiellement, et selon cette première variante, la première composition comprend au moins un premier additif de formule (V) et au moins un second additif chimique de formule (IIA).

De préférence, et toujours selon cette première variante, le premier additif chimique de formule (V) est choisi parmi les diacides (z=2), les triacides (z=3) et les tétracides (z=4), de préférence parmi les diacides (z=2).

Plus préférentiellement, et toujours selon cette première variante, le premier additif chimique de formule (V) est choisi parmi l'acide adipique ou acide 1,6-hexanedioïque avec w = 4, l'acide pimélique ou acide 1,7-heptanedioïque avec w = 5, l'acide subérique ou acide 1,8-octanedioïque avec w = 6, l'acide azélaique ou acide 1,9-nonanedioïque avec w = 7, l'acide sébacique ou acide 1,10-décanedioïque avec w = 8, l'acide undécanedioïque avec w = 9, l'acide 1,2-dodécanedioïque avec w = 10 ou l'acide tétradécanedioïque avec w = 12.

Avantageusement, et selon cette première variante, le premier additif chimique de formule (V) est l'acide sébacique ou acide 1,10-décanedioïque avec w = 8.

Selon une seconde variante de ce mode réalisation, la première composition comprend au moins un premier additif chimique de formule (II) et au moins un second additif chimique choisi parmi : les additifs chimiques de formule (I) ; les additifs chimiques de formule (II) ; les additifs chimiques de formule (III) ; les additifs chimiques de formule (V) ; les additifs chimiques de formule (VI) ; les additifs chimiques de formule (VII) et les produits de réaction d'au moins un polyol en C₃-C₁₂ et d'au moins un aldéhyde en C₂-C₁₂, notamment ceux comprenant un groupement de formule (IV), le second additif chimique étant distinct du premier additif chimique.

De préférence, et selon cette seconde variante, le premier additif chimique de formule (II) est choisi parmi les additifs chimiques de formule (IIA).

Plus préférentiellement, et selon cette seconde variante, la première composition comprend au moins un premier additif chimique de formule (IIA) et au moins un second additif chimique choisi parmi : les additifs chimiques de formule (I) ; les additifs chimiques de formule (IIB) ; les additifs chimiques de formule (III) ; les additifs chimiques de formule (V) ; les additifs chimiques de formule (VI) ; les additifs chimiques de formule (VII) et les produits de réaction d'au moins un polyol en C₃-C₁₂ et d'au moins un aldéhyde en C₂-C₁₂, notamment ceux comprenant un groupement de formule (IV), le second additif chimique étant distinct du premier additif chimique.

Encore plus préférentiellement, et selon cette seconde variante, la première composition comprend au moins un premier additif de formule (IIA) et au moins un second additif chimique de formule (V).

Avantageusement, et selon cette seconde variante, le premier additif chimique de formule (II) est le N,N'-éthylènedi(stéaramide).

De préférence, et selon cette seconde variante, le second additif chimique de formule (V) est choisi parmi l'acide adipique ou acide 1,6-hexanedioïque avec w = 4, l'acide pimélique ou acide 1,7-heptanedioïque avec w = 5, l'acide subérique ou acide 1,8-octanedioïque avec w = 6, l'acide azélaique ou acide 1,9-nonanedioïque avec w = 7, l'acide sébacique ou acide 1,10-décanedioïque avec w = 8, l'acide undécanedioïque avec w = 9, l'acide 1,2-dodécanedioïque avec w = 10 ou l'acide tétradécanedioïque avec w = 12.

Selon une troisième variante préférée de ce mode de réalisation, la première composition comprend au moins de l'acide sébacique ou acide 1,10-décanedioïque et au moins du N,N'-éthylènedi(stéaramide).

Selon une quatrième variante de ce mode de réalisation, la première composition comprend au moins un premier additif de formule (I) et au moins un second additif chimique choisi parmi : les additifs chimiques de formule (I) ; les additifs chimiques de formule (II) ; les additifs chimiques de formule (III) ; les additifs chimiques de formule (V) ; les additifs chimiques de formule (VI) ; les additifs chimiques de formule (VII) et les produits de réaction d'au moins un polyol en C₃-C₁₂ et d'au moins un aldéhyde en C₂-C₁₂, notamment ceux comprenant un groupement de formule (IV), le second additif chimique étant distinct du premier additif chimique.

De préférence, et selon cette quatrième variante, le second additif chimique est choisi parmi les additifs chimiques de formule (II) et les additifs chimiques de formule (V).

De préférence, et selon cette quatrième variante, le second additif chimique de formule (II) est choisi parmi les additifs chimiques de formule (IIA).

Plus préférentiellement, et selon cette quatrième variante, le second additif chimique de formule (II) est le N,N'-éthylènedi(stéaramide).

De préférence, et toujours selon cette quatrième variante, le second additif chimique de formule (V) est choisi parmi les diacides (z=2), les triacides (z=3) et les tétracides (z=4), de préférence parmi les diacides (z=2).

Encore plus préférentiellement, et toujours selon cette quatrième variante, le second additif chimique de formule (V) est choisi parmi l'acide adipique ou acide 1,6-hexanedioïque avec w = 4, l'acide pimélique ou acide 1,7-heptanedioïque avec w = 5, l'acide subérique ou acide 1,8-octanedioïque avec w = 6, l'acide azélaique ou acide 1,9-nonanedioïque avec w = 7, l'acide sébacique ou acide 1,10-décanedioïque avec w = 8, l'acide undécanedioïque avec w = 9, l'acide 1,2-dodécanedioïque avec w = 10 ou l'acide tétradécanedioïque avec w = 12.

Avantageusement, et toujours selon cette quatrième variante, le second additif chimique de formule (V) est l'acide sébacique ou acide 1,10-décanedioïque.

De préférence, et selon cette quatrième variante, le premier additif chimique de formule (I) est le 2',3-bis[(3-[3, 5-di-*tert*-butyl-4-hydroxyphenyl]propionyl)]propionohydrazide.

De préférence, et selon ce mode de réalisation, le ratio massique du premier additif chimique par rapport au second additif chimique est de 1 :99 à 99 :1, de préférence de 1 :9 à 9:1, encore plus préférentiellement de 1 :5 à 5 :1.

### Adjuvant polymère oléfinique

Selon un mode de réalisation de l'invention, la première composition peut en outre comprendre au moins un adjuvant polymère oléfinique.

L'adjuvant polymère oléfinique est choisi, de préférence, dans le groupe consistant en (a) les copolymères éthylène/(méth)acrylate de glycidyle ; (b) les terpolymères éthylène/monomère A/monomère B et (c) les copolymères résultant du greffage d'un monomère B sur un substrat polymère.
(a) Les copolymères éthylène/(méth)acrylate de glycidyle sont, avantageusement, choisis parmi les copolymères statistiques ou séquencés, de préférence statistiques, d'éthylène et d'un monomère choisi parmi l'acrylate de glycidyle et le méthacrylate de glycidyle, comprenant de 50% à 99,7% en masse, de préférence de 60% à 95% en masse, plus préférentiellement de 60% à 90% en masse d'éthylène.
(b) Les terpolymères sont, avantageusement, choisis parmi les terpolymères statistiques ou séquencés, de préférence statistiques, d'éthylène, d'un monomère A et d'un monomère B.

Le monomère A est choisi parmi l'acétate de vinyle et les acrylates ou méthacrylates d'alkyle en C₁ à C₆.

Le monomère B est choisi parmi l'acrylate de glycidyle et le méthacrylate de glycidyle.

Les terpolymères éthylène/monomère A/monomère B comprennent de 0,5% à 40% en masse, de préférence de 5% à 35% masse, plus préférentiellement de 10% à 30% en masse de motifs issus du monomère A et, de 0,5% à 15% en masse, de préférence de 2,5% à 15% en masse de motifs issus du monomère B, le reste étant formé de motifs issus de l'éthylène.

(c) Les copolymères résultent du greffage d'un monomère B choisi parmi l'acrylate de glycidyle et le méthacrylate de glycidyle, sur un substrat polymère. Le substrat polymère consiste en un polymère choisi parmi les polyéthylènes, notamment les polyéthylènes basse densité, les polypropylènes, les copolymères statistiques ou séquencés, de préférence statistiques, d'éthylène et d'acétate de vinyle et les copolymère statistiques ou séquencés, de préférence statistiques, d'éthylène et d'acrylate ou méthacrylate d'alkyle en C₁ à C₆, comprenant de 40% à 99,7% en masse, de préférence de 50% à 99% en masse d'éthylène. Lesdits copolymères greffés comprennent de 0,5% à 15% en masse, de préférence de 2,5% à 15% en masse de motifs greffés issus du monomère B.

Avantageusement, l'adjuvant polymère oléfinique est choisi parmi les terpolymères statistiques d'éthylène (b), d'un monomère A choisi parmi les acrylates ou méthacrylates d'alkyle en C₁ à C₆ et d'un monomère B choisi parmi l'acrylate de glycidyle et le méthacrylate de glycidyle, comprenant de 0,5% à 40% en masse, de préférence de 5% à 35% masse, plus préférentiellement de 10% à 30% en masse de motifs issus du monomère A et, de 0,5% à 15% en masse, de préférence de 2,5% à 15% en masse de motifs issus du monomère B, le reste étant formé de motifs issus de l'éthylène.

Selon un mode de réalisation de l'invention, la première composition, comprenant par exemple une base bitume, dont est composé le coeur des granules, comprend de 0,05% à 15% en masse, de préférence de 0,1% à 10% en masse, plus préférentiellement de 0,5% à 6% en masse de l'adjuvant polymère oléfinique, par rapport à la masse totale de la première composition.

Selon un mode de réalisation de l'invention, la première composition peut également comprendre d'autres additifs connus ou d'autres élastomères pour bitume connus tels que les copolymères SB (copolymère à blocs du styrène et du butadiène), SBS (copolymère à blocs styrène-butadiène-styrène), SIS (styrène-isoprène-styrène), SBS^{∗} (copolymère à blocs styrène-butadiène-styrène en étoile), SBR (styrène-b-butadiène-rubber), EPDM (éthylène propylène diène modifié). Ces élastomères peuvent en outre être réticulés selon tout procédé connu, par exemple avec du soufre. On peut également citer les élastomères réalisés à partir de monomères styrène et de monomères butadiène permettant une réticulation sans agent réticulant tels que décrits dans les documents WO 2007/058994, WO 2008/137394 et par la demanderesse dans la demande de brevet WO 11/013073.

Selon un mode de réalisation particulier préféré, la première composition comprend une combinaison de l'additif chimique de formule (**II**) et l'adjuvant polymère ***oléfinique*** décrits ci-dessus.

On préférera la combinaison dans laquelle l'additif chimique est de formule (**II**) où m=0, plus préférentiellement où m=0 et n=0.

On préférera également la combinaison dans laquelle l'adjuvant polymère oléfinique est choisi parmi les terpolymères (b) éthylène/monomère A/monomère B décrits ci-dessus.

Plus préférentiellement, la première composition, par exemple le bitume routier, comprend l'additif chimique de formule (**II**) où m=0, plus préférentiellement où m=0 et n=0 et l'adjuvant polymère oléfinique choisi parmi les terpolymères (b) éthylène/monomère A/monomère B décrits ci-dessus.

### - La couche de revêtement / seconde composition :

Selon l'invention, la couche de revêtement est obtenue par application d'une composition comprenant :
- au moins un composé viscosifiant choisi parmi les éthers de cellulose, et
- au moins un agent anti-agglomérant
sur tout ou partie de la surface du coeur en bitume.

La composition précurseur de la couche de revêtement peut comporter au moins un solvant pour faciliter son application.

Les termes « viscosifiant » et « composé viscosifiant » sont utilisés au sens de l'invention, de manière équivalente et indépendamment l'un de l'autre. Par « viscosifiant » ou « composé viscosifiant », on entend un composé qui a la propriété de diminuer la fluidité d'un liquide ou d'une composition et donc d'en augmenter la viscosité.

Le viscosifiant au sens de l'invention est un matériau qui présente une viscosité dynamique supérieure ou égale à 50 mPa.s⁻¹, de préférence de 50 mPa.s⁻¹ à 550 mPa.s⁻¹, plus préférentiellement de 80 mPa.s⁻¹ à 450 mPa.s⁻¹, la viscosité étant une viscosité Brookfield mesurée à 65°C. La viscosité d'un viscosifiant selon l'invention est mesurée à 65°C au moyen d'un viscosimètre Brookfield CAP 2000+ et à une vitesse de rotation de 750 tr/min. La lecture de la mesure est réalisée après 30 secondes pour chaque température.

La couche de revêtement est solide à température ambiante élevée, notamment à une température supérieure à 60°C.

Selon un mode de réalisation de l'invention, l'épaisseur moyenne de la couche de revêtement est, de préférence, supérieure ou égale à 20 µm, plus préférentiellement de 20 à 200 µm, et encore plus préférentiellement de 40 à 150 µm, et encore plus préférentiellement de 50 à 100 µm. La couche de revêtement doit être suffisamment épaisse pour que celle-ci soit continue.

Outre le composé éther de cellulose et l'agent anti-agglomérant, la couche de revêtement peut éventuellement comprendre un ou plusieurs composés choisis parmi : les autres composés viscosifiants, les additifs chimiques qui ont été décrits ci-dessus, les polymères, les agents plastifiants, les tensioactifs, ...

La composition de revêtement comprend de préférence, sur la base de sa composition finale, de 5 à 40% en poids de plastifiant, en particulier de 5 à 25% en poids, avec une teneur en poids de 5 à 20 % de façon plus préférentielle. Il est possible d'utiliser pour cela un plastifiant habituel dans des compositions de revêtement de film.

Parmi les agents plastifiants, on peut citer les acides gras, comme par exemple l'acide stéarique, ou les mélanges d'acides gras comme le produit commercialisé sous la marque Miglyol ^{®}.

Selon un mode de réalisation préféré, la couche de revêtement est essentiellement constituée de :
- un ou plusieurs composés viscosifiants choisis parmi les éthers de cellulose, et
- au moins un agent anti-agglomérant.

Avantageusement, selon ce mode de réalisation, la couche de revêtement comprend, ou mieux consiste essentiellement en :
- un ou plusieurs éthers de cellulose et
- au moins 10 % d'un ou plusieurs agents anti-agglomérants,
les pourcentages étant exprimés en masse par rapport à la masse totale de la couche de revêtement.

Encore plus avantageusement, selon ce mode de réalisation, la couche de revêtement comprend, ou mieux consiste essentiellement en :
- un ou plusieurs éthers de cellulose et
- au moins 20 %, encore mieux au moins 30 %, avantageusement au moins 40 % et encore plus avantageusement au moins 50 % d'un ou plusieurs agents anti-agglomérants,
les pourcentages étant exprimés en masse par rapport à la masse totale de la couche de revêtement.

Selon un autre mode de réalisation préféré, la couche de revêtement est essentiellement constituée de :
- un ou plusieurs composés viscosifiants choisis parmi les éthers de cellulose,
- au moins un agent anti-agglomérant, et
- au moins un agent plastifiant.

Avantageusement, selon ce mode de réalisation, la couche de revêtement comprend, ou mieux consiste essentiellement en :
- un ou plusieurs éthers de cellulose,
- au moins 10 % d'un ou plusieurs agents anti-agglomérants,
- au moins un agent plastifiant,
les pourcentages étant exprimés en masse par rapport à la masse totale de la couche de revêtement.

Encore plus avantageusement, selon ce mode de réalisation, la couche de revêtement comprend, ou mieux consiste essentiellement en :
∘ un ou plusieurs éthers de cellulose et
∘ au moins 20 %, encore mieux au moins 30 %, avantageusement au moins 40 % et encore plus avantageusement au moins 50 % d'un ou plusieurs agents anti-agglomérants,
   - au moins un agent plastifiant,
les pourcentages étant exprimés en masse par rapport à la masse totale de la couche de revêtement.

Avantageusement, la seconde composition est sous forme d'une solution ou d'une dispersion dans un solvant.

Le solvant est avantageusement choisi parmi l'eau et les mélanges d'eau et de solvants organiques miscibles avec l'eau tels que les alcools, par exemple l'éthanol, le méthanol, le glycérol.

Préférentiellement, la concentration en matériau autre que le solvant dans lesdites solutions et/ou dispersions est de 50 g/L à 500 g/L, de préférence de 75 g/L à 300 g/L et encore plus préférentiellement de 100 g/L à 250 g/L.

### • l'éther de cellulose

L'éther de cellulose est un dérivé de la cellulose dans lequel tout ou partie des fonctions hydroxyle de la cellulose a réagi avec un réactif chimique de façon à former un éther. D'autres fonctionnalisations de la cellulose sont possibles en plus des fonctions éther. L'éther de cellulose peut être sous forme de sel.

Parmi les éthers de cellulose on peut citer : la méthyl cellulose, l'éthylcellulose, l'hydroxyméthylcellulose l'hydroxyéthylcellulose (HEC), l'hydroxypropylcellulose (HPC), l'hydroxyéthyl méthylcellulose (HEMC), l'hydroxypropyl méthylcellulose (HPMC), l'hydroxybutyl méthylcellulose (HBMC), la carboxyméthylcellulose (CMC), la carboxyméthylcellulose de sodium (Na-CMC), la carboxyméthylsulfoéthylcellulose, l'hydroxyéthylméthylcarboxyméthylcellulose.

Avantageusement, le ou les éthers de cellulose sont choisis parmi les éthers de cellulose à caractère hydrophile.

Avantageusement, le ou les éthers de cellulose sont choisis parmi : l'hydroxyéthyl méthylcellulose, l'hydroxypropyl méthylcellulose, l'hydroxybutyl méthylcellulose, encore plus avantageusement l'hydroxypropyl méthylcellulose.

De préférence, la couche de revêtement comprend au moins 10% en masse d'un ou plusieurs composés viscosifiants choisi parmi les éthers de cellulose, par rapport à la masse de la couche de revêtement, plus préférentiellement au moins 20% en masse, et encore plus préférentiellement au moins 30% en masse.

Avantageusement, la couche de revêtement comprend au moins 40% en masse d'un ou plusieurs composés viscosifiants choisi parmi les éthers de cellulose, plus avantageusement au moins 50% en masse, par rapport à la masse totale de la couche de revêtement.

Encore plus avantageusement, la couche de revêtement comprend de 10% à 90% en masse d'un ou plusieurs composés viscosifiants choisi parmi les éthers de cellulose, de préférence de 25% à 75% en masse, encore plus préférentiellement de 40% à 60% en masse, par rapport à la masse totale de couche de revêtement.

### • les autres composés viscosifiants :

De préférence, outre les éthers de cellulose, les viscosifiants sont choisis parmi :
- les composés gélifiants, de préférence d'origine végétale ou animale, tels que : la gélatine, l'agar-agar, les alginates, les amidons, les amidons modifiés, ou les gommes gellanes ;
- les polyéthylène glycols (PEG) tels que les PEG ayant un poids moléculaire compris entre 800 g.mol⁻¹ et 8000 g.mol⁻¹, comme par exemple un PEG ayant un poids moléculaire de 800 g.mol⁻¹ (PEG-800), un PEG ayant un poids moléculaire de 1000 g.mol⁻¹ (PEG-1000), un PEG ayant un poids moléculaire de 1500 g.mol⁻¹ (PEG-1500), un PEG ayant un poids moléculaire de 4000 g.mol⁻¹ (PEG-4000) ou un PEG ayant un poids moléculaire de 6000 g.mol⁻¹ (PEG-6000);
- les mélanges de tels composés.

Avantageusement, outre les éthers de cellulose, les viscosifiants sont choisis parmi :
- les composés gélifiants de préférence d'origine végétale ou animale, tels que : la gélatine, l'agar-agar, les alginates, les gommes gellanes ;
- les polyéthylène glycols (PEG) tels que les PEG ayant un poids moléculaire compris entre 800 g.mol⁻¹ et 8000 g.mol⁻¹, comme par exemple un PEG ayant un poids moléculaire de 800 g.mol⁻¹ (PEG-800), un PEG ayant un poids moléculaire de 1000 g.mol⁻¹ (PEG-1000), un PEG ayant un poids moléculaire de 1500 g.mol⁻¹ (PEG-1500), un PEG ayant un poids moléculaire de 4000 g.mol⁻¹ (PEG-4000) ou un PEG ayant un poids moléculaire de 6000 g.mol⁻¹ (PEG-6000);
- les mélanges de tels composés.

### • Les composés anti-agglomérants :

Le composé anti-agglomérant est d'origine minérale ou organique. Par « anti-agglomérant » ou « composé anti-agglomérant », on entend tout composé qui limite, réduit, inhibe, retarde, l'agglomération et/ou l'adhésion des granules entre eux lors de leur transport et/ou de leur stockage à température ambiante et qui assure leur fluidité lors de leur manipulation.

Plus préférentiellement, le composé anti-agglomérant est choisi parmi : le talc ; les fines, également appelées "fillers", généralement de diamètre inférieur à 125 µm, telles que les fines siliceuses, à l'exception des fines calcaires ; le sable tel que le sable de fontainebleau ; le ciment ; le carbone ; les résidus de bois tels que la lignine, le lignosulfonate, les poudres d'aiguilles de conifères, les poudres de cônes de conifères, notamment de pin ; les cendres de balles de riz ; la poudre de verre ; les argiles telles que le kaolin, la bentonite, la vermiculite ; l'alumine telle que les hydrates d'alumine ; la silice ; les dérivés de silice tels que les fumées de silice, les fumées de silice fonctionnalisées, notamment les fumées de silice hydrophobe ou hydrophile, les silices pyrogénées, notamment les silices pyrogénées hydrophobes ou hydrophiles, les silicates, les hydroxydes de silicium et les oxydes de silicium ; la poudre de matière plastique ; la chaux ; la chaux hydratée ; le plâtre ; la poudrette de caoutchouc ; la poudre de polymères, tels que les copolymères styrène-butadiène (SB), les copolymères styrène-butadiène-styrène (SBS) et les mélanges de ces matériaux.

Avantageusement, l'anti-agglomérant est choisi parmi le talc ; les fines généralement de diamètre inférieur à 125 µm à l'exception des fines calcaires, telles que les fines siliceuses ; les résidus du bois tels que la lignine, la lignosulfonate, les poudres d'aiguilles de conifères, les poudres de cônes de conifères, notamment de pin; la poudre de verre ; le sable tel que le sable de fontainebleau ; les fumées de silice, notamment les fumées de silice hydrophobe ou hydrophile ; et leurs mélanges.

De préférence, la couche de revêtement comprend au moins 10% en masse d'un ou plusieurs agents anti-agglomérants, par rapport à la masse de la couche de revêtement, plus préférentiellement au moins 20% en masse, et encore plus préférentiellement au moins 30% en masse.

Avantageusement, la couche de revêtement comprend au moins 40% en masse d'un ou plusieurs agents anti-agglomérants, plus avantageusement au moins 50% en masse, par rapport à la masse totale de la couche de revêtement.

Encore plus avantageusement, la couche de revêtement comprend de 10% à 90% en masse d'un ou plusieurs agents anti-agglomérants, de préférence de 25% à 75% en masse, encore plus préférentiellement de 40% à 60% en masse, par rapport à la masse totale de couche de revêtement.

### - Les granules :

Au sens de l'invention, le terme « granules de matériau utilisable comme liant routier ou comme liant d'étanchéité » peut également être défini comme un matériau utilisable comme liant routier ou comme liant d'étanchéité solide à température ambiante conditionné sous une forme divisée, c'est-à-dire sous forme d'unités de petite taille nommées granules ou particules, comportant un coeur à base de matériau utilisable comme liant routier ou comme liant d'étanchéité et une enveloppe ou coque ou enrobage ou couche de revêtement ou revêtement.

De préférence, la couche de revêtement recouvrant les granules de matériau utilisable comme liant routier ou comme liant d'étanchéité selon l'invention est continue.

De préférence, la couche de revêtement est appliquée de façon à ce qu'au moins 90% de la surface du coeur desdits granules soit recouverte de la couche de revêtement, de préférence au moins 95%, plus préférentiellement au moins 99%.

Selon un mode de réalisation de l'invention, la couche de revêtement recouvrant au moins une partie de la surface du coeur des granules représente de 0,2% à 20% en masse, de préférence de 0,5% à 15% en masse, plus préférentiellement de 1% à 10% par rapport à la masse totale du cœur des granules.

De préférence, les granules de matériau utilisable comme liant routier ou comme liant d'étanchéité, avantageusement de bitume, selon l'invention, peuvent avoir au sein d'une même population de granules, une ou plusieurs formes choisies parmi une forme cylindrique, sphérique ou semi-sphérique ou ovoïde, de préférence sous une forme semi-sphérique. La taille des granules est telle que la dimension moyenne la plus longue est de préférence inférieure ou égale à 50 mm, plus préférentiellement de 2 à 30 mm, encore plus préférentiellement comprise de 3 à 20 mm. La taille et la forme des granules peuvent varier selon le procédé de fabrication employé. Par exemple, l'utilisation d'une filière permet de contrôler la fabrication de granules d'une taille choisie. Un tamisage permet de sélectionner des granules en fonction de leur taille.

De préférence, les granules de matériau utilisable comme liant routier ou comme liant d'étanchéité, avantageusement les granules de bitume, selon l'invention présentent un poids compris entre 0,1 g et 50 g, de préférence entre 0,2 g et 10 g, plus préférentiellement entre 0,2 g et 5 g.

Sans être liée à la théorie, la Demanderesse a découvert de manière inattendue que l'utilisation d'un composé viscosifiant de type éther de cellulose et d'au moins un anti-agglomérant selon l'invention permet d'obtenir une couche de revêtement :
- qui est résistante aux conditions climatiques et aux conditions de transport et/ou de stockage extrêmes du matériau solide utilisable comme liant routier ou comme liant d'étanchéité,
- qui se casse facilement sous un effet de cisaillement mécanique, comme par exemple sous l'effet d'un cisaillement mécanique appliqué dans une cuve telle qu'un malaxeur ou un tambour-malaxeur lors de la fabrication d'enrobés,
- qui ne nécessite pas d'étape supplémentaire après son application.

Plus particulièrement, la couche de revêtement résiste au transport et/ou au stockage du matériau utilisable comme liant routier ou comme liant d'étanchéité, notamment du bitume, à température ambiante élevée, notamment à une température supérieure à 60°C, dans des « Big Bags » tout en étant cassante sous l'effet d'un cisaillement mécanique. Elle permet ainsi la libération du coeur lors de la fabrication d'enrobés.

Selon un mode de réalisation de l'invention, les granules de bitume peuvent comprendre en outre une ou plusieurs autres couches de revêtement recouvrant tout ou en partie la couche de revêtement du matériau solide utilisable comme liant routier ou comme liant d'étanchéité, notamment du bitume, selon l'invention.

### - Procédé de fabrication des granules :

Un autre objet de l'invention concerne un procédé de fabrication de granules de matériau solide utilisable comme liant routier ou comme liant d'étanchéité, notamment du bitume, composés d'un coeur et d'une couche de revêtement du coeur, ce procédé comprenant :
i) la mise en forme du coeur à partir d'au moins une première composition,
ii) l'enrobage du coeur sur tout ou partie de sa surface par au moins une seconde composition comprenant au moins un composé viscosifiant choisi parmi les éthers de cellulose et au moins un composé anti-agglomérant.

L'étape ii) peut être réalisée par trempage, pulvérisation, co-extrusion, etc. De préférence, l'étape ii) est réalisée par un procédé mettant en oeuvre un dispositif à lit d'air fluidisé.

La mise en forme du coeur des granules à partir d'un matériau solide utilisable comme liant routier ou comme liant d'étanchéité, notamment du bitume, peut être réalisée selon tout procédé connu, par exemple selon le procédé de fabrication décrit dans le document US 3 026 568, le document WO 2009/153324 ou le document WO 2012/168380. Selon un mode de réalisation particulier, la mise en forme du coeur de matériau solide peut être réalisée par égouttage, en particulier à l'aide d'un tambour.

D'autres techniques peuvent être utilisées dans le procédé de fabrication du coeur de matériau solide, en particulier le moulage, le pastillage, l'extrusion...

L'enrobage des granules de matériau solide utilisable comme liant routier ou comme liant d'étanchéité, notamment du bitume, peut être fait par toute technique connue, notamment par application du second matériau dans un procédé en lit fluidisé, comme décrit par exemple dans US 5,236,503 ou dans EP 1 407 814.

De préférence, les particules de cœur de matériau solide présentent une dimension moyenne la plus longue allant de 1 à 30 mm, avantageusement de 2 à 20 mm, de manière encore plus avantageuse de 2 à 10 mm.

De préférence, lors de la mise en œuvre du procédé de l'invention, le ratio en masse de la couche de revêtement par rapport à la masse de cœur, éventuellement additivé, est de 0,05 à 1, avantageusement de 0,1 à 0,9, de manière encore plus avantageuse de 0,1 à 0,5.

Un autre objet de l'invention consiste en des granules de matériau solide utilisable comme liant routier ou comme liant d'étanchéité, notamment du bitume, susceptibles d'être obtenus par la mise en œuvre du procédé selon l'invention tel que décrit ci-dessus. De tels granules présentent avantageusement les propriétés décrites ci-dessus.

### - Utilisations des granules :

Un autre objet de l'invention concerne également l'utilisation des granules de selon l'invention comme liant routier.

Le liant routier peut être employé pour fabriquer des enrobés, en association avec des granulats selon tout procédé connu.

De préférence, les granules de matériau solide utilisable comme liant routier ou comme liant d'étanchéité, notamment de bitume, selon l'invention, sont utilisés pour la fabrication d'enrobés.

Les enrobés bitumineux ou non bitumineux sont utilisés comme matériaux pour la construction et l'entretien des corps de chaussée et de leur revêtement, ainsi que pour la réalisation de tous travaux de voiries. On peut citer par exemple les enduits superficiels, les enrobés à chaud, les enrobés à froid, les enrobés coulés à froid, les graves émulsions, les couches de bases, de liaison, d'accrochage et de roulement, et d'autres associations d'un liant bitumineux ou non bitumineux et du granulat routier possédant des propriétés particulières, telles que les couches anti-orniérantes, les enrobés drainants, ou les asphaltes (mélange entre un liant bitumineux et des granulats du type du sable).

Un autre objet de l'invention concerne un procédé de fabrication d'enrobés comprenant au moins un liant routier et des granulats, le liant routier étant choisi parmi les granules de matériau solide selon l'invention, ce procédé comprenant au moins les étapes de :
- chauffage des granulats à une température allant de 100°C à180°C, de préférence de 120°C à 160°C,
- mélange des granulats avec le liant routier dans une cuve telle qu'un malaxeur ou un tambour malaxeur,
- obtention d'enrobés.

Le procédé de l'invention présente l'avantage de pouvoir être mis en œuvre sans étape préalable de chauffage des granules de matériau solide.

Le procédé de fabrication d'enrobés selon l'invention ne requiert pas d'étape de chauffage des granules avant mélange avec les granulats car au contact des granulats chauds, les granules fondent.

Les granules de matériau solide utilisable comme liant routier ou comme liant d'étanchéité, notamment de bitume, selon l'invention tels que décrits ci-dessus présentent l'avantage de pouvoir être ajoutés directement aux granulats chauds, sans avoir à être fondus préalablement au mélange avec les granulats chauds.

De préférence, l'étape de mélange des granulats et du liant routier est réalisée sous agitation, puis l'agitation est maintenue pendant au plus 5 minutes, de préférence au plus 2 minutes pour permettre l'obtention d'un mélange homogène.

Les granules selon la présente invention sont remarquables en ce qu'ils permettent le transport et/ou le stockage et/ou la manipulation de bitume routier à température ambiante élevée dans des conditions extrêmes, en particulier sans qu'il y ait agglomération et/ou adhésion des granules de matériau solide lors de leur transport et/ou leur stockage et/ou leur manipulation. Par ailleurs, la couche de revêtement des granules casse sous l'effet du contact avec les granulats chauds et du cisaillement et il libère la composition formant le cœur. Enfin, la présence de la couche de revêtement dans le mélange de liant routier et de granulats ne dégrade pas les propriétés dudit bitume routier pour une application routière, comparativement à une composition de cœur non enrobée.

### - Procédé de transport et/ou de stockage et/ou de manipulation de matériau solide utilisable comme liant routier ou comme liant de revêtement

Les granules obtenus par le procédé de l'invention peuvent être transportés et/ou stockés et/ou manipulés sous forme de granules de matériau solide, notamment de bitume, solides à température ambiante.

Le matériau solide, notamment le bitume routier, peut être transporté et/ou stocké à une température ambiante élevée pendant une durée supérieure ou égale à 2 mois, préférence à 3 mois.

De préférence, la température ambiante élevée est de 20°C à 90°C, de préférence de 20°C à 80°C, plus préférentiellement de 40°C à 80°C, encore plus préférentiellement de 40°C à 60°C.

Les granules de matériau solide, notamment de bitume, obtenus par le procédé selon l'invention présentent l'avantage de conserver leur forme divisée, et donc de pouvoir être manipulés, après un stockage et/ou un transport à une température ambiante élevée. Ils présentent en particulier la capacité de s'écouler sous leur propre poids sans fluer, ce qui permet leur stockage dans un conditionnement en sacs, en fûts ou en containers de toutes formes et de tous volumes puis leur transvasement depuis ce conditionnement vers un équipement, comme un équipement de chantier (cuve, mélangeur etc...).

Les granules de matériau solide, notamment de bitume, sont, de préférence, transportés et/ou stockés en vrac dans des sacs de 1 kg à 100 kg ou de 500 kg à 1000 kg couramment appelés dans le domaine des bitumes routiers des « Big Bag », lesdits sacs étant de préférence en matériau thermofusible. Ils peuvent également être transportés et/ou stockés en vrac dans des cartons de 5 kg à 30 kg ou dans des fûts de 100 kg à 200 kg.

Les différents modes de réalisation, variantes, les préférences et les avantages décrits ci-dessus pour chacun des objets de l'invention s'appliquent à tous les objets de l'invention et peuvent être pris séparément ou en combinaison.

### Figures :

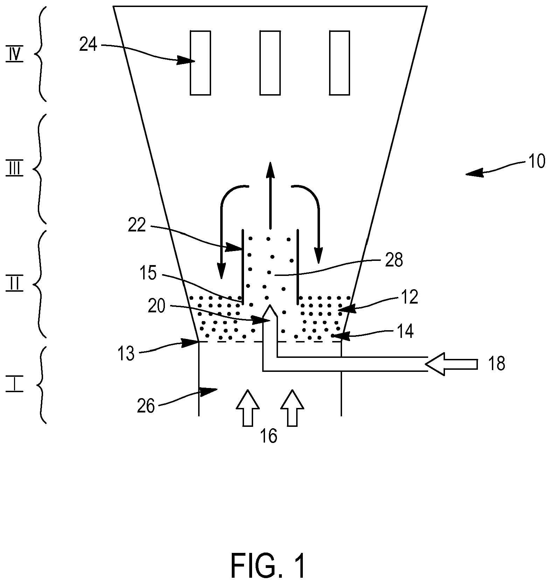

### Figure 1 : vue en coupe de l'installation à lit d'air fluidisé

Se référant à la figure 1, l'installation (10) à lit d'air fluidisé (12) (aussi appelé granulateur) comprend une chambre de procédé (II) à lit d'air fluidisé (12) dans laquelle les cœurs en un matériau bitumineux (14) sont placés et dans laquelle un courant d'air (16) est amené par le bas au lit fluidisé (12) et à travers une grille perforée (13) afin de maintenir le lit fluidisé et afin de sécher et/ou refroidir les coques formées autour des cœurs en matériau bitumineux (14). Une composition précurseur de la couche de revêtement (18) est ensuite amenée au lit fluidisé par le biais d'une buse de pulvérisation (20) débouchant par le bas dans le lit fluidisé (12). La chambre de procédé (II) à lit fluidisé (12) comprend également un insert (22) situé au-dessus de la buse de pulvérisation (20) et sous la forme d'une pièce d'installation cylindrique réglable en hauteur et en diamètre et dont les arrêtes inférieures (15) sont distantes de manière réglable de la grille perforée (13) du fond du lit fluidisé (12).

La chambre de filtration (IV) comprend plusieurs filtres (24) permettant de recycler les particules fines émises lors de la mise en œuvre du procédé.

Le courant d'air (16) amené au lit fluidisé (12) est guidé par un boitier d'air entrant (I) comprenant une chambre d'air entrant (26).

Le granulateur à lit d'air fluidisé (12) comprend ainsi 4 zones distinctes : (I) le boitier d'air entrant, (II) la chambre de procédé, (III) la chambre d'expansion et (IV) la chambre de filtration.

La zone du lit fluidisé formée par la chambre d'air entrant (26) présente une zone (28) avec une vitesse d'écoulement plus élevée du courant d'air (16) appliqué aux cœurs en un matériau bitumineux (14).

La composition précurseur de la couche de revêtement (18) est amenée dans la zone (28) fonctionnant à une vitesse d'écoulement plus élevée.

Les cœurs en un matériau bitumineux (14) provenant de la zone (28) à vitesse d'écoulement plus élevée sont ramenés au lit fluidisé (12).

Une partie des cœurs en matériau bitumineux (14) présents dans le lit fluidisé (12) est ramenée dans la zone (28) à vitesse d'écoulement plus élevée, de sorte qu'il apparaît une circulation de cœurs en matériau bitumineux (14) entre le lit fluidisé (12) et la zone (28) à vitesse d'écoulement plus élevée.

L'invention est illustrée par les exemples suivants donnés à titre non limitatif.

### Partie expérimentale :

Dans ces Exemples, les parties et pourcentages sont exprimés en poids sauf indication contraire.

### Matériel

### • Dispositif à lit d'air fluidisé :

### Installation 1 :

L'installation 1 est une installation à lit d'air fluidisé employée dans le procédé de fabrication des granules selon l'invention.

Les exemples 1 à 6 suivants ont été réalisés dans un granulateur à lit d'air fluidisé commercialisé par l'entreprise Glatt^{®} sous le nom commercial ProCell^{®} et dont la vue en coupe est représentée sur la Figure 1.

### • Matières premières :

Les cœurs de matériau bitumineux utilisés comme matière première dans les exemples ci-dessous sont composés de :
**Base bitume (B)** : une base bitume de grade 50/70, notée **B₁**, ayant une pénétrabilité P₂₅ de 58 1/10 mm et une TBA de 49,6°C et disponible commercialement auprès du groupe TOTAL sous la marque AZALT^{®}

### Additif :

- Additif A1 de formule (I) : acide sébacique
- Additif A2 de formule (II) : N,N'-éthylènedi(stéaramide) commercialisé par la société Croda sous le nom Crodawax 140 ^{®}.

### • Composition de cœur

**Tableau 1 : composition du liant bitumineux constituant le cœur des granules**

| | C1 |
|---|---|
| Base bitume | B1 |
| A1 | 1,5% |
| A2 | 2,5% |

Les quantités sont exprimées en pourcentage en masse de composé additif par rapport à la masse totale de la composition.

La composition de revêtement utilisée pour l'enrobage des cœurs de granule est préparée à partir des composés suivants :

### Agent viscosifiant :

- Agent viscosifiant V1 : l'hydroxypropylméthylcellulose introduite sous forme de SEPIFILM ^{®} LP 010 disponible commercialement auprès de la société SEPPIC,
- Agent viscosifiant V2 : Cellulose (CAS 9004-34-6) disponible commercialement auprès de la société Sigma-Aldrich,
- Agent viscosifiant V3 : Gelatine de type 280 Bloom 6 Mesh-Pig Skin disponible commercialement auprès de la société Weishardt International.

### Agent anti-agglomérant :

- Agent anti-agglomérant AG1 : fines siliceuses en provenance de La Noubleau

### • Procédés et méthodes :

### I - Préparation des cœurs des granules

### 1. Préparation de la composition de cœur

On introduit la base bitume (**B₁**) dans un réacteur maintenu à 160°C sous agitation à 300 tours/min pendant deux heures. On introduit ensuite dans le réacteur les additifs. Le contenu du réacteur est maintenu à 160°C sous agitation à 300 tours/min pendant 1 heure.

### 2. Préparation des cœurs des granules de liant solide

### a) Méthode générale pour la préparation des cœurs en liant des granules selon l'invention

La composition de cœur est réchauffée à 160°C pendant deux heures à l'étuve avant d'être coulée dans un moule en silicone présentant différents trous de forme sphérique de façon à former les cœurs de liant solide. Après avoir constaté la solidification du liant dans le moule, le surplus est arasé avec une lame chauffée au bec bunsen. Après 30 minutes, le liant solide sous forme de granules non enrobés est démoulé et stocké dans un plateau recouvert de papier siliconé. On laisse ensuite refroidir les cœurs en liant à température ambiante pendant 10 à 15 minutes.

### b) Méthode générale pour la préparation des cœurs en bitume des granules selon l'invention avec un procédé industriel

Pour la mise en œuvre de cette méthode, on peut utiliser un dispositif et un procédé tels que décrits de façon très détaillée dans le brevet US 4 279 579. Différents modèles de ce dispositif sont disponibles commercialement auprès de la société Sandvik sous le nom commercial de Rotoform ^{®}.

Des granules de bitume peuvent également être obtenus à partir de la composition bitumineuse selon l'invention versée dans le réservoir d'un tel dispositif et maintenues à une température comprise entre 130 et 160°C.

Une buse ou plusieurs buses d'injection permet(tent) le transfert de la composition de bitume selon l'invention à l'intérieur du double tambour de pastillation comportant un tambour externe rotatif, les deux tambours étant équipés de fentes, de buses et d'orifices permettant la pastillation de gouttes de bitume au travers du premier tambour fixe et des orifices présentant un diamètre compris entre 2 et 8 mm du tambour externe rotatif. Les gouttes de bitume sont déposées sur la face supérieure d'une bande de roulement, horizontale, entrainée par des rouleaux.

Des granules de bitume ont été obtenus à partir de la composition bitumineuse **C1** versée dans le réservoir d'un tel dispositif et maintenue à une température comprise entre 130 et 160°C.

Une buse ou plusieurs buses d'injection permet(tent) le transfert de la composition bitumineuse **C1** à l'intérieur du double tambour de pastillation comportant un tambour externe rotatif, les deux tambours étant équipés de fentes, de buses et d'orifices permettant la pastillation de gouttes de bitume au travers du premier tambour fixe et des orifices présentant un diamètre compris entre 2 et 8 mm du tambour externe rotatif. Les gouttes de bitume sont déposées sur la face supérieure d'une bande de roulement, horizontale, entrainée par des rouleaux.

### II - Enrobage des cœurs de granules

### 1. Préparation de la couche de revêtement

La composition précurseur de la couche de revêtement est une composition aqueuse comprenant au moins :
- un agent viscosifiant, et
- un agent anti-agglomérant.

Elle est préparée par mélange des composants à température ambiante dans de l'eau.

### 2. Enrobage des granules :

### a) Méthode générale pour l'enrobage des cœurs de granules selon l'invention (premier mode de réalisation)

Les cœurs en bitume obtenus en I- sont versés dans la composition de revêtement. Ils sont ensuite agités manuellement dans la solution pendant quelques minutes puis ils sont retirés pour être déposés sur une plaque et laissés à sécher à température ambiante (environ 30°C).

On obtient ainsi des granules de bitume solide à structure cœur/enveloppe.

### b) Méthode générale pour l'enrobage des cœurs de granules selon un procédé industriel (second mode de réalisation)

Les cœurs en matériau bitumineux sont chargés dans la chambre de procédé du dispositif de la figure 1, le flux d'air étant en fonctionnement. Les cœurs en matériau bitumineux sont ainsi fluidisés par le flux d'air injecté dans la chambre de procédé. Enfin, la composition précurseur de la couche de revêtement est pulvérisée dans la chambre de procédé par le biais de la buse de pulvérisation.

### III - Essai de résistance à la charge des granules

Cet essai est mis en œuvre afin d'évaluer la résistance à la charge des granules sous un effort en compression. En effet, cet essai permet de simuler les conditions de température et de compression des granules les unes sur les autres auxquelles elles sont soumises lors du transport et/ou du stockage en vrac dans des sacs de 10 à 100 kg ou dans des Big Bag de 500 à 1000 kg ou dans des fûts de 200 kg et d'évaluer leur résistance dans ces conditions.

L'essai de résistance à la charge est réalisé selon le protocole suivant : 5 mL de granules sont placés dans une seringue de 20 mL puis le piston est placé sur les granules ainsi qu'une masse de 208g, représentant une force appliquée comme dans un Big Bag. Le tout est ensuite placé à l'étuve soit à une température de 25°C pendant au moins 24h (essais de résistance à la charge à température ambiante) soit à une température de 65°C pendant au moins 4 heures (essais de résistance à la charge à température ambiante élevée).

### IV - Evaluation de l'aspect collant des granules

L'aspect collant des granules est évalué au toucher par un manipulateur directement après l'étape d'enrobage des cœurs (sans étape de séchage).

Pour chaque type de granules, le manipulateur prélève une dizaine de granules et évalue le caractère collant de chacun d'entre eux en les plaçant tout d'abord entre deux doigts puis en essayant d'écarter les doigts de la surface du granule.

### Résultats

### 1. Granules de bitume enrobés au moyen d'un dispositif à lit d'air fluidisé (second mode de réalisation)

### a) Préparation des granules de bitume

Les expériences 1 à 6 sont réalisées dans le dispositif 10 représenté sur la figure 1 selon la méthode d'enrobage décrite en II- 2. b).

Les paramètres de réalisation des différentes expériences sont donnés dans le tableau 2 ci-dessous. La pression de pulvérisation (en bars) est de 1 à 3 bars.

La composition de revêtement utilisée dans les expériences 1 à 6 est préparée à partir :
- de l'hydroxypropylméthylcellulose comme agent viscosifiant (agent V1), et
- de fines siliceuses en provenance de La Noubleau comme agent anti-agglomérant (agent AG1).

**Tableau 2**

| Exemples | **1** | **2 (*)** | **3 (*)** | **4 (*)** | **5** | **6** |
|---|---|---|---|---|---|---|
| **Composition précurseur de la couche de revêtement** | | | | | | |
| % d'agent viscosifiant | - | 10 | 10 | 10 | 7,5 | 10 |
| % agent antiagglomérant | 20 | - | - | - | 12,5 | 10 |

| **Conditions de mise en œuvre du procédé** | | | | | | |
|---|---|---|---|---|---|---|
| Quantité de cœurs fluidisés (en g) | | 1050 | 937 | 1305 | 1107 | 1123 |
| Quantité de composition précurseur pulvérisée (en g) | 1003 | 407 | 194 | 224 | 1060 | 1000 |
| Débit de fluidisation (en m³/h) | 300 | 300 | 280 | 280 | 250 | 250 |
| Température du produit (en °C) | 35 | 35 | 35 | 35 | 17 | 17 |
| Débit de pulvérisation (en g/min) | 25,1 | 22,6 | 10,8 | 3,3 | 15,4 | 14,1 |

| | | | | | | |
|---|---|---|---|---|---|---|
| (^{∗}) suite à l'agglomération des granules au cours du procédé, celui-ci a été interrompu avant d'avoir pulvérisé la totalité de la composition précurseur. | | | | | | |

Les exemples 1 à 4 sont des contre-exemples.

Les exemples 5 et 6 sont des exemples selon l'invention.

### b) Evaluation des granules de bitume obtenus

Les granules obtenus dans les exemples 1 à 6 sont ensuite évalués selon plusieurs critères :
1) l'obtention de granules de bitume comprenant un cœur et une couche de revêtement,
2) l'homogénéité de la couche de revêtement formée,
3) la déformation des granules,
4) la présence d'agglomérats, et
5) leur tenue à haute température (résistance à la charge évaluée à 65°C pendant 4h).

Les résultats sont présentés dans le tableau 3 ci-dessous.

**Tableau 3**

| Exemples | **1** | **2** | **3** | **4** | **5** | **6** |
|---|---|---|---|---|---|---|
| Formation de granules | oui | non | non | non | oui | oui |
| Tenue à température ambiante à 65°C | - | - | - | - | ++ | +++ |

| | | | | | | |
|---|---|---|---|---|---|---|
| +++ : les granules conservent leur forme initiale et n'adhèrent pas entre eux. ++ : les granules n'adhèrent pas entre eux mais ne présentent plus leur forme arrondie. + : les granules adhèrent légèrement entre eux. - : les granules sont agglomérés. | | | | | | |

### • Couche de revêtement comprenant exclusivement un agent anti-agglomérant (exemple 1)

Dans l'exemple 1, la composition précurseur de la couche de revêtement ne comprend qu'un agent anti-agglomérant.

On constate que les granules de bitume obtenus selon l'exemple 1 ne sont pas stables à haute température.

La seule présence d'un agent antiagglomérant dans la composition précurseur de la couche de revêtement ne permet pas l'obtention de granules de bitume stables à haute température.

### • Couche de revêtement comprenant uniquement un agent viscosifiant choisi parmi les éthers de cellulose (exemples 2, 3, 4)

Dans les exemples 2, 3, et 4, la composition précurseur de la couche de revêtement comprend exclusivement un agent viscosifiant choisi parmi les éthers de cellulose.

Les cœurs et la composition précurseur de la couche de revêtement pulvérisée dans la chambre de procédé se collent entre eux sans pour autant former des granules. Les cœurs s'agglomèrent et rendent impossible la formation de granules de bitume.

La seule présence d'un agent viscosifiant choisi parmi les éthers de cellulose dans la composition précurseur de la couche de revêtement ne permet pas l'obtention de granules de bitume bien individualisés.

### • Couche de revêtement comprenant à la fois un agent viscosifiant choisi parmi les éthers de cellulose et un agent anti-agglomérant (exemples 5 et 6)

Dans les exemples 5 et 6, la composition précurseur de la couche de revêtement comprend à la fois un agent viscosifiant choisi parmi les éthers de cellulose et un agent anti-agglomérant.

Les granules de bitume formés dans les exemples 5 et 6 présentent une bonne résistance à un conditionnement à une température ambiante de 65°C dans la mesure où ils n'adhèrent quasiment pas entre eux.

Les granules formés dans l'exemple 6 sont particulièrement avantageux en ce qu'ils conservent leur forme initiale.

Ainsi, la manipulation et le transport/stockage desdits granules formés dans les exemples 5 et 6 seront aisés dans la mesure où les granules ne s'agglomèrent pas entre eux à température ambiante élevée.

### 2. Granules de bitume enrobés par trempage (premier mode de réalisation)

### a) Préparation des granules de bitume

Pour les expériences 7, 8 et 9, l'enrobage des cœurs de bitume est réalisé par trempage dans la composition de revêtement selon la méthode décrite en II- 2. a).

La nature de la composition de revêtement utilisée pour chacune des expériences 7, 8 et 9 est donnée dans le tableau 4 suivant.

**Tableau 4**

| Exemples | **7** | **8** | **9** |
|---|---|---|---|
| *Agent viscosifiant* | | | |
| % Agent V1 | 14,3 | - | - |
| % Agent V2 | - | 14,3 | - |
| % Agent V3 | - | - | 14,3 |

| *Agent anti-agglomérant* | | | |
|---|---|---|---|
| % Agent AG1 | 14,3 | 14,3 | 14,3 |

L'expérience 7 est selon l'invention.

Les expériences 8 et 9 sont comparatives.

### b) Evaluation des granules de bitume obtenus

Les granules obtenus dans les exemples 7 à 9 sont ensuite évalués selon plusieurs critères :
1) l'aspect collant de la couche de revêtement, et
2) leur tenue à température ambiante (résistance à la charge évaluée à 25°C pendant 24h).

Les résultats sont présentés dans le tableau 5 ci-dessous.

**Tableau 5**

| Exemples | **7** | **8** | **9** |
|---|---|---|---|
| Aspect collant | non | oui | oui |
| Tenue à température ambiante à 25°C | +++ | + | + |

| | | | |
|---|---|---|---|
| +++ : les granules conservent leur forme initiale et n'adhèrent pas entre eux. ++ : les granules n'adhèrent pas entre eux mais ne présentent plus leur forme arrondie. + : les granules adhèrent légèrement entre eux. - : les granules sont agglomérés. | | | |

### ^{∗}Aspect collant des granules

Les granules préparés dans l'exemple 7 sont avantageux en ce qu'ils ne collent pas. Ces derniers peuvent alors être mis en sac et stockés directement après l'étape d'enrobage sans nécessiter d'étape supplémentaire de séchage.

A l'inverse, les granules préparés dans les exemples 8 et 9 sont collants. Il est par conséquent nécessaire pour ces granules de procéder à une étape supplémentaire de séchage de la couche de revêtement avant de pouvoir les mettre en sacs.

### ^{∗}Tenue à température ambiante à 25°C

Les granules préparés dans les exemples 8 et 9 adhèrent légèrement entre eux.

Les granules préparés dans l'exemple 7 sont avantageux en ce qu'ils conservent leur forme initiale et ne présentent aucune adhésion.

Par conséquent, la manipulation et le transport/stockage des granules formés dans l'exemple 7 sont aisés dans la mesure et n'entrainent pas d'altération de l'état des granules.

## Revendications

1. Granules de matériau utilisable comme liant routier ou comme liant d'étanchéité comprenant un cœur et une couche de revêtement, dans lesquels :
- le cœur est constitué d'une première composition comprenant au moins un matériau choisi parmi : une base bitume, un brai, un liant clair,
et
- la couche de revêtement est constituée d'une seconde composition qui comprend :
• au moins un composé viscosifiant choisi parmi les éthers de cellulose, et
• au moins un agent anti-agglomérant.

2. Granules selon la revendication 1 dans lesquels l'éther de cellulose est choisi parmi : la méthyl cellulose, l'éthylcellulose, l'hydroxyméthylcellulose, l'hydroxyéthylcellulose (HEC), l'hydroxypropylcellulose (HPC), l'hydroxyéthyl méthylcellulose (HEMC), l'hydroxypropyl méthylcellulose (HPMC), l'hydroxybutyl méthylcellulose (HBMC), la carboxyméthylcellulose (CMC), la carboxyméthylcellulose de sodium (Na-CMC), la carboxyméthylsulfoéthylcellulose, l'hydroxyéthylméthylcarboxyméthylcellulose.

3. Granules selon la revendication 2 dans lesquels l'éther de cellulose est choisi parmi : l'hydroxyéthyl méthylcellulose, l'hydroxypropyl méthylcellulose, l'hydroxybutyl méthylcellulose, encore plus avantageusement l'hydroxypropyl méthylcellulose.

4. Granules selon l'une quelconque des revendications précédentes dans lesquels la seconde composition comprend au moins 10% d'un ou plusieurs agents anti-agglomérants, les pourcentages étant exprimés en masse par rapport à la masse totale de la seconde composition.

5. Granules selon l'une quelconque des revendications précédentes dans lesquels le composé anti-agglomérant est choisi parmi : le talc ; les fines généralement de diamètre inférieur à 125 µm, telles que les fines siliceuses, à l'exception des fines calcaires ; le sable tel que le sable de fontainebleau ; le ciment ; le carbone ; les résidus de bois tels que la lignine, le lignosulfonate, les poudres d'aiguilles de conifères, les poudres de cônes de conifères, notamment de pin ; les cendres de balles de riz ; la poudre de verre ; les argiles telles que le kaolin, la bentonite, la vermiculite ; l'alumine telle que les hydrates d'alumine ; la silice ; les dérivés de silice tels que les fumées de silice, les fumées de silice fonctionnalisées, notamment les fumées de silice hydrophobe ou hydrophile, les silices pyrogénées, notamment les silices pyrogénées hydrophobes ou hydrophiles, les silicates, les hydroxydes de silicium et les oxydes de silicium ; la poudre de matière plastique; la chaux ; la chaux hydratée ; le plâtre ; la poudrette de caoutchouc ; la poudre de polymères, tels que les copolymères styrène-butadiène (SB), les copolymères styrène-butadiène-styrène (SBS) et les mélanges de ces matériaux.

6. Granules selon l'une quelconque des revendications précédentes dans lesquels la première composition présente une pénétrabilité à l'aiguille mesurée à 25°C selon la norme EN 1426 de 5 à 330 1/10 mm, de préférence de 10 à 220 1/10 mm.

7. Granules selon l'une quelconque des revendications précédentes dans lesquels la première composition comprend en outre au moins un additif chimique choisi parmi : un composé organique, une paraffine, un acide polyphosphorique, un dope d'adhésivité et leurs mélanges.

8. Procédé de fabrication de granules de matériau utilisable comme liant routier ou comme liant d'étanchéité composés d'un cœur et d'une couche de revêtement du cœur selon l'une quelconque des revendications précédentes, ce procédé comprenant :
i) la mise en forme du cœur à partir d'une première composition comprenant au moins un matériau choisi parmi : une base bitume, un brai, un liant clair,
ii) l'enrobage du cœur sur tout ou partie de sa surface par une seconde composition comprenant au moins un composé viscosifiant choisi parmi les éthers de cellulose et au moins un agent anti-agglomérant.

9. Procédé selon la revendication 8 dans lequel la seconde composition est appliquée sur le cœur des granules dans un dispositif à lit d'air fluidisé.

10. Utilisation des granules selon l'une quelconque des revendications 1 à 7 comme liant routier.

11. Utilisation selon la revendication 10 pour la fabrication d'enrobés.

12. Procédé de fabrication d'enrobés comprenant au moins un liant routier et des granulats, le liant routier étant choisi parmi les granules selon l'une quelconque des revendications 1 à 7, ce procédé comprenant au moins les étapes de :
- chauffage des granulats à une température allant de 100°C à 180°C, de préférence de 120°C à 160°C,
- mélange des granulats avec le liant routier dans une cuve telle qu'un malaxeur ou un tambour malaxeur,
- obtention d'enrobés.

13. Procédé selon la revendication 12, qui ne comporte pas d'étape de chauffage du liant routier avant son mélange avec les granulats.

14. Procédé de transport et/ou de stockage et/ou de manipulation de matériau utilisable comme liant routier ou comme liant d'étanchéité, ledit procédé comprenant la mise en forme à partir du matériau de granules de bitume selon l'une quelconque des revendications 1 à 7, puis le transport et/ou le stockage et/ou la manipulation des granules .

## Patentansprüche

1. Materialgranulatkörner, die als Bindemittel für den Straßenbau oder als abdichtendes Bindemittel verwendet werden können, wobei sie einen Kern und einen Überzug umfassen, wobei:
- der Kern aus einer ersten Zusammensetzung besteht, welche mindestens ein Material umfasst, das aus den folgenden ausgewählt ist: einer Bitumengrundlage, einem Pech, einem klaren Bindemittel,
und
- der Überzug aus einer zweiten Zusammensetzung besteht, welche Folgendes umfasst:
• mindestens eine verdickende Verbindung, die aus den Celluloseethern ausgewählt ist, und
• mindestens ein Trennmittel.

2. Granulatkörner nach Anspruch 1, wobei der Celluloseether aus den folgenden ausgewählt ist: Methylcellulose, Ethylcellulose, Hydroxymethylcellulose, Hydroxyethylcellulose (HEC), Hydroxypropylcellulose (HPC), Hydroxyethylmethylcellulose (HEMC), Hydroxypropylmethylcellulose (HPMC), Hydroxybutylmethylcellulose (HBMC), Carboxymethylcellulose (CMC), NatriumCarboxymethylcellulose (Na-CMC), Carboxymethylsulfoethylcellulose, Hydroxyethylmethylcarboxymethylcellulose.

3. Granulatkörner nach Anspruch 2, wobei der Celluloseether aus den folgenden ausgewählt ist: Hydroxyethylmethylcellulose, Hydroxypropylmethylcellulose, Hydroxybutylmethylcellulose, noch vorteilhafterweise Hydroxypropylmethylcellulose.

4. Granulatkörner nach einem beliebigen der vorhergehenden Ansprüche, wobei die zweite Zusammensetzung mindestens 10 % an einem oder mehreren Trennmitteln umfasst, wobei die Prozentangaben nach Masse ausgedrückt sind, bezogen auf die Gesamtmasse der zweiten Zusammensetzung.

5. Granulatkörner nach einem beliebigen der vorhergehenden Ansprüche, wobei das Trennmittel aus den folgenden ausgewählt ist: Talk; im Allgemeinen Feinstoffe mit einem Durchmesser von weniger als 125 µm, wie etwa siliciumdioxidartige Feinstoffe, mit Ausnahme von kalkartigen Feinstoffen; Sand, wie etwa Fontainebleau-Sand; Zement; Kohlenstoff; Holzrückstände wie etwa Lignin, Lignosulfonat, Koniferennadelpulver, Koniferenzapfenpulver, insbesondere von der Kiefer; Reisspelzenasche; Glaspulver; Tonsorten wie etwa Kaolin, Bentonit, Vermiculit; Aluminiumoxid wie etwa Aluminiumoxid-Hydrate; Siliciumdioxid; Siliciumdioxid-Derivate wie etwa pyrogene Siliciumdioxide, funktionalisierte pyrogene Siliciumdioxide, insbesondere hydrophobe oder hydrophile pyrogene Siliciumdioxide, pyrogene Kieselsäuren, insbesondere hydrophobe oder hydrophile pyrogene Kieselsäuren, Silicate, Siliciumhydroxide und Siliziumoxide; Kunststoffpulver; Brennkalk; Löschkalk; Gips; Kautschukkörnchen; Polymerpulver wie etwa Styrol-Butadien-Copolymere (SB), Styrol-Butadien-Styrol-Copolymere (SBS) sowie Mischungen dieser Materialien.

6. Granulatkörner nach einem beliebigen der vorhergehenden Ansprüche, wobei die erste Zusammensetzung eine Nadelpenetration, gemessen bei 25 °C gemäß der Norm EN 1426, von 5 bis 330 1/10 mm, vorzugsweise von 10 bis 220 1/10 mm aufweist.

7. Granulatkörner nach einem beliebigen der vorhergehenden Ansprüche, wobei die erste Zusammensetzung darüber hinaus mindestens einen chemischen Zusatzstoff umfasst, welcher aus den folgenden ausgewählt ist: einer organischen Verbindung, einem Paraffin, einer Polyphosphorsäure, einem Haftkraftverstärker und deren Mischungen.

8. Verfahren zur Herstellung von Materialgranulatkörnern, die als Bindemittel für den Straßenbau oder als abdichtenden Bindemittel verwendet werden können und sich aus einem Kern und einem Überzug gemäß einem beliebigen der vorhergehenden Ansprüche zusammensetzen, wobei das Verfahren Folgendes umfasst:
i) Formen des Kerns aus einer ersten Zusammensetzung, die mindestens ein Material umfasst, welche aus den folgenden ausgewählt ist: einem Bitumengrundstoff, einem Pech, einem klaren Bindemittel,
ii) Überziehen des Kerns auf einem Teil oder der Gesamtheit seiner Oberfläche mit einer zweiten Zusammensetzung, die mindestens eine verdickende Verbindung, welche aus den Celluloseethern ausgewählt ist, und mindestens ein Trennmittel umfasst.

9. Verfahren nach Anspruch 8, wobei die zweite Zusammensetzung in einer Wirbelluftschichtvorrichtung auf den Kern der Granulatkörner aufgebracht wird.

10. Verwendung der Granulatkörner nach einem beliebigen der Ansprüche 1 bis 7 als Bindemittel für den Straßenbau.

11. Verwendung nach Anspruch 10 zur Herstellung von Asphaltmischgut.

12. Verfahren zur Herstellung von Asphaltmischgut, welches zumindest ein Bindemittel für den Straßenbau und Gesteinskörnungen umfasst, wobei das Bindemittel für den Straßenbau aus den Granulatkörnern nach einem beliebigen der Ansprüche 1 bis 7 ausgewählt ist, wobei das Verfahren zumindest die folgenden Schritte umfasst:
- Erhitzen der Gesteinskörnungen auf eine Temperatur im Bereich von 100 °C bis 180 °C, vorzugsweise von 120 °C bis 160 °C,
- Vermischen der Gesteinskörnungen mit dem Bindemittel für den Straßenbau in einem Behälter wie etwa einem Mischgerät oder einer Mischtrommel,
- Erhalten von Asphaltmischgut.

13. Verfahren nach Anspruch 12, wobei es keinen Schritt aufweist, im welchem das Bindemittel für den Straßenbau erhitzt wird, bevor es mit den Gesteinskörnungen vermischt wird.

14. Verfahren zum Transport und/oder zur Lagerung und/oder zur Handhabung von Material, welches als Bindemittel für den Straßenbau oder als abdichtendes Bindemittel verwendet werden kann, wobei das Verfahren eine Formgebung, ausgehend von dem Bitumengranulatkörnermaterial nach einem beliebigen der Ansprüche 1 bis 7 umfasst, woraufhin die Granulatkörner transportiert und/oder gelagert und/oder gehandhabt werden.

## Claims

1. Pellets of material that can be used as a road binder or as a sealing binder, comprising a core and a coating layer, wherein:
- the core consists of a first composition comprising at least one material chosen from: a bitumen base, a pitch and a clear binder,
and
- the coating layer consists of a second composition which comprises:
• at least one viscosifying compound, chosen from cellulose ethers, and
• at least one anticaking agent.

2. The pellets as claimed in claim 1, wherein the cellulose ether is chosen from: methylcellulose, ethylcellulose, hydroxymethylcellulose hydroxyethylcellulose (HEC), hydroxypropylcellulose (HPC), hydroxyethylmethylcellulose (HEMC), hydroxypropylmethylcellulose (HPMC), hydroxybutylmethylcellulose (HBMC), carboxymethylcellulose (CMC), sodium carboxymethylcellulose (Na-CMC), carboxymethylsulfoethylcellulose, hydroxyethylmethylcarboxymethylcellulose.

3. The pellets as claimed in claim 2, wherein the cellulose ether is chosen from: hydroxyethylmethylcellulose, hydroxypropylmethylcellulose, hydroxybutylmethylcellulose, even more advantageously hydroxypropylmethylcellulose.

4. The pellets as claimed in any one of the preceding claims, wherein the second composition comprises at least 10% of one or more anticaking agents, the percentages being expressed by weight relative to the total weight of the second composition.

5. The pellets as claimed in any one of the preceding claims, wherein the anticaking compound is chosen from: talc; fines generally less than 125 µm in diameter, such as siliceous fines, with the exception of limestone fines, sand, such as Fontainebleau sand; cement; carbon; wood residues, such as lignin, lignosulfonate, conifer needle powders or conifer cone powders, in particular of pine; rice husk ash; glass powder; clays, such as kaolin, bentonite or vermiculite; alumina, such as alumina hydrates; silica; silica derivatives, such as fumed silica, functionalized fumed silica, in particular hydrophobic or hydrophilic fumed silica, pyrogenic silicas, in particular hydrophobic or hydrophilic pyrogenic silicas, silicates, silicon hydroxides and silicon oxides; plastic powder; lime; hydrated lime; plaster; rubber crumb; polymer powder, where the polymers are such as styrene/butadiene (SB) copolymers or styrene/butadiene/styrene (SBS) copolymers; and mixtures of these materials.

6. The pellets as claimed in any one of the preceding claims, wherein the first composition has a needle penetrability measured at 25°C according to the standard EN 1426 of from 5 to 330 1/10 mm, preferably from 10 to 220 1/10 mm.

7. The pellets as claimed in any one of the preceding claims, wherein the first composition also comprises at least one chemical additive chosen from: an organic compound, a paraffin, a polyphosphoric acid, an adhesion dopant, and mixtures thereof.

8. A process for manufacturing pellets of material that can be used as a road binder or as a sealing binder, composed of a core and a core coating layer as claimed in any one of the preceding claims, this process comprising:
i) shaping the core from a first composition comprising at least one material chosen from: a bitumen base, a pitch and a clear binder,
ii) coating the core on all or part of its surface with a second composition comprising at least one viscosifying compound chosen from cellulose ethers and at least one anticaking agent.

9. The process as claimed in claim 8, wherein the second composition is applied to the core of the pellets in a fluidized air bed device.

10. The use of the pellets as claimed in any one of claims 1 to 7, as a road binder.

11. The use as claimed in claim 10, for manufacturing bituminous mixes.

12. A process for manufacturing bituminous mixes comprising at least one road binder and aggregates, the road binder being chosen from the pellets as claimed in any one of claims 1 to 7, this process comprising at least the steps of:
- heating the aggregates to a temperature ranging from 100°C to 180°C, preferably from 120°C to 160°C,
- mixing the aggregates with the road binder in a tank such as a mixer or a mixing drum,
- obtaining bituminous mixes.

13. The process as claimed in claim 12, which does not comprise a step of heating the road binder before it is mixed with the aggregates.

14. A process for transporting and/or storing and/or handling material that can be used as a road binder or as a sealing binder, said process comprising shaping the material in the form of pellets as claimed in any one of claims 1 to 7, and then the transport and/or storage and/or handling of the pellets.
